# EUROPEAN PATENT APPLICATION

(11) **EP 4 804 573 A1**
(43) Date of publication of application: **09.09.2026**
(21) Application number: 24884967.1
(22) Date of filing: 01.11.2024
(51) Int. Cl.: H04W 4/20

(54) **DATA CHANNEL (DC) ESTABLISHMENT METHOD, MESSAGE PROCESSING METHOD, RESOURCE ALLOCATION METHOD, AND RELATED DEVICES**

(30) Priority: 02.11.2023 CN 202311452312; 21.06.2024 CN 202410809427
(71) Applicant: Vivo Mobile Communication Co., Ltd., Dongguan, Guangdong 523863 (CN)
(72) Inventor: JIN, Hui, Dongguan, Guangdong 523863 (CN); WU, Xiaobo, Dongguan, Guangdong 523863 (CN); SUN, Xiaowen, Dongguan, Guangdong 523863 (CN)
(74) Representative: Shieldmark
(86) International application number: PCT/CN2024/129337
(87) International publication number: WO 2025/092970

(57) **Abstract**

The present application discloses a data channel DC establishment method, a message processing method, a resource allocation method, and related devices, belonging to the field of communication technologies. The DC establishment in embodiments of the present application includes: sending, by a first terminal, a first message without establishing a voice, video, or messaging media, where the first message is used to request establishment of a target DC, and the target DC includes at least one of a bootstrap DC and an application DC; and receiving, by the first terminal, a first response message, and establishing the target DC according to the first response message.

## Description

### CROSS-REFERENCE TO RELATED APPLICATIONS

The present application claims priority to the Chinese patent application filed with the China National Intellectual Property Administration on November 2, 2023, with application No. 202311452312.1 and entitled "DATA CHANNEL DC ESTABLISHMENT METHOD, MESSAGE PROCESSING METHOD, RESOURCE ALLOCATION METHOD, AND RELATED DEVICES", and the Chinese patent application filed with the China National Intellectual Property Administration on June 21, 2024, with application No. 202410809427.X and entitled "DATA CHANNEL DC ESTABLISHMENT METHOD, MESSAGE PROCESSING METHOD, RESOURCE ALLOCATION METHOD, AND RELATED DEVICES", which are incorporated herein by reference in their entireties.

### TECHNICAL FIELD

The present application pertains to the field of communication technologies, and specifically relates to a data channel DC establishment method, a message processing method, a resource allocation method, and related devices.

### BACKGROUND

The 3rd generation partnership project (3rd Generation Partnership Project, 3GPP) standard introduces a mechanism for establishing a data channel (Data Channel, DC) during a call. A DC enables additional services during the call, such as screen sharing, location sharing, and file transfer, thereby improving the user experience.

However, in the related art, establishment of a DC is performed accompanied by establishment of services such as voice calls, video calls, or short message services, which makes the DC establishment process insufficiently flexible.

### SUMMARY

Embodiments of the present application provide a DC establishment method, a message processing method, a resource allocation method, and related devices, which can solve the problem that the DC establishment process is insufficiently flexible.

According to a first aspect, a DC establishment method is provided and executed by a first terminal, and the method includes:
sending, by the first terminal, a first message without establishing a voice, video, or messaging media, where the first message is used to request establishment of a target DC, and the target DC includes at least one of a bootstrap (bootstrap) DC and an application (application) DC; and
receiving, by the first terminal, a first response message, and establishing the target DC according to the first response message.

According to a second aspect, a message processing method is provided and executed by a second terminal, and the method includes:
sending, by the second terminal, a 180 message corresponding to a third message in a case that the second terminal receives the third message and a third condition is satisfied, where the third message is used to request establishment of a target DC, and the target DC includes at least one of a bootstrap DC and an application DC; and
the third condition includes at least one of the following:
   the third message is used to request establishment of an application DC;
   the second terminal successfully downloads a DC application corresponding to the application DC; and
   the second terminal successfully establishes a bearer corresponding to the application DC.

According to a third aspect, a message processing method is provided and executed by an IP multimedia subsystem application server (IP Multimedia Subsystem Application Server, IMS AS), and the method includes:
receiving, by the IMS AS, a first message from a first terminal; and
executing, by the IMS AS, a first operation according to the first message, where the first operation includes at least one of the following:
   sending second indication information to a DCSF in a case that the first message is used to request establishment of a bootstrap DC, where the second indication information is used to indicate to establish only the bootstrap DC;
   sending first SDP offer information to a second terminal in a case that the first message is used to request establishment of a bootstrap DC and an application DC, where the first SDP offer information is used to establish the bootstrap DC, and sending second SDP offer information to the second terminal in a case that the IMS AS receives first SDP answer information from the second terminal, where the first SDP answer information is SDP answer information corresponding to the first SDP offer information, and the second SDP offer information is used for establishing the application DC; and
   sending a fourth message to the DCSF in a case that the first message is used to request establishment of an application DC, where the fourth message is used to notify the DCSF to establish only a bootstrap DC for the second terminal.

According to a fourth aspect, a resource allocation method is provided and executed by a data channel signaling function (Data Channel Signaling Function, DCSF), and the method includes:
receiving, by the DCSF, a fourth message from the IMS AS;
allocating or reserving, by the DCSF resources corresponding to a bootstrap DC for a first terminal in a case that the fourth message is used to notify to establish only a bootstrap DC for the first terminal; or
allocating or reserving, by the DCSF, resources corresponding to a bootstrap DC for a second terminal in a case that the fourth message is used to notify to establish only a bootstrap DC for the second terminal.

According to a fifth aspect, a DC establishment apparatus is provided for a first terminal, and the apparatus includes:
a first sending module, configured to send a first message without establishing a voice, video, or messaging media, where the first message is used to request establishment of a target DC, and the target DC includes at least one of a bootstrap DC and an application DC; and
a first establishment module, configured to receive a first response message, and establish the target DC according to the first response message.

According to a sixth aspect, a message processing apparatus is provided for a second terminal, and the apparatus includes:
a first transmission module, configured to send a 180 message corresponding to the third message in a case that a third message is received and a third condition is satisfied, where the third message is used to request establishment of a target data channel DC, and the target DC includes at least one of a bootstrap DC and an application DC; and
the third condition includes at least one of the following:
   the third message is used to request establishment of an application DC;
   the second terminal successfully downloads a DC application corresponding to the application DC; and
   the second terminal successfully establishes a bearer corresponding to the application DC.

According to a seventh aspect, a message processing apparatus is provided for an IMS AS, and the apparatus includes:
a first receiving module, configured to receive a first message from a first terminal; and
an execution module, configured to execute a first operation according to the first message, where the first operation includes at least one of the following:
   sending second indication information to a data channel signaling function DCSF in a case that the first message is used to request establishment of a bootstrap data channel DC, where the second indication information is used to indicate to establish only the bootstrap DC;
   sending first SDP offer information to a second terminal in a case that the first message is used to request establishment of a bootstrap DC and an application DC, where the first SDP offer information is used to establish the bootstrap DC, and sending second SDP offer information to the second terminal in a case that the IMS AS receives first SDP answer information from the second terminal, where the first SDP answer information is SDP answer information corresponding to the first SDP offer information, and the second SDP offer information is used for establishing the application DC; and
   sending a fourth message to the DCSF in a case that the first message is used to request establishment of an application DC, where the fourth message is used to notify the DCSF to establish only a bootstrap DC for the second terminal.

According to an eighth aspect, a resource allocation apparatus is provided for a DCSF, and the apparatus includes:
a second receiving module, configured to receive a fourth message from an IP multimedia subsystem application server IMS AS;
a first resource allocation module, configured to allocate or reserve resources corresponding to the bootstrap DC for a first terminal by the DCSF in a case that the fourth message is used to notify to establish only a bootstrap data channel DC for the first terminal; or
a second resource allocation module, configured to allocate or reserve resources corresponding to the bootstrap DC for a second terminal by the DCSF in a case that the fourth message is used to notify to establish only a bootstrap DC for the second terminal.

According to a ninth aspect, a terminal is provided and includes a processor and a memory, where the memory stores a program or instructions executable on the processor, and the program or instructions, when executed by the processor, implement the steps of the method according to the first aspect or the second aspect.

According to a tenth aspect, a terminal is provided and includes a processor and a communication interface; where
in a case that the terminal is a first terminal, the communication interface is configured to send a first message without establishing a voice, video, or messaging media, receive a first response message, and establish a target DC according to the first response message, where the first message is used to request establishment of the target DC, and the target DC includes at least one of a bootstrap DC and an application DC; and
in a case that the terminal is a second terminal, the communication interface is configured to send a 180 message corresponding to the third message in a case that a third message is received and a third condition is satisfied, where the third message is used to request establishment of a target data channel DC, and the target DC includes at least one of a bootstrap DC and an application DC; and
the third condition includes at least one of the following:
   the third message is used to request establishment of an application DC;
   the second terminal successfully downloads a DC application corresponding to the application DC; and
   the second terminal successfully establishes a bearer corresponding to the application DC.

According to an eleventh aspect, a network-side device is provided and includes a processor and a memory, where the memory stores a program or instructions executable on the processor, and the program or instructions, when executed by the processor, implement the steps of the method according to the third aspect or the fourth aspect.

According to a twelfth aspect, a network-side device is provided and includes a processor and a communication interface;
in a case that the network-side device is an IMS AS, the communication interface is configured to receive a first message from a first terminal, and the processor is configured to execute a first operation according to the first message, where the first operation includes at least one of the following:
sending second indication information to a data channel signaling function DCSF in a case that the first message is used to request establishment of a bootstrap data channel DC, where the second indication information is used to indicate to establish only the bootstrap DC;
sending first SDP offer information to a second terminal in a case that the first message is used to request establishment of a bootstrap DC and an application DC, where the first SDP offer information is used to establish the bootstrap DC, and sending second SDP offer information to the second terminal in a case that the IMS AS receives first SDP answer information from the second terminal, where the first SDP answer information is SDP answer information corresponding to the first SDP offer information, and the second SDP offer information is used for establishing the application DC; and
sending a fourth message to the DCSF in a case that the first message is used to request establishment of an application DC, where the fourth message is used to notify the DCSF to establish only a bootstrap DC for the second terminal; and
in a case that the network-side device is a DCSF, the communication interface is configured to receive a fourth message from an IP Multimedia Subsystem Application Server IMS AS; the processor is configured to allocate or reserve resources corresponding to the bootstrap DC for a first terminal by the DCSF in a case that the fourth message is used to notify to establish only a bootstrap data channel DC for the first terminal; or the processor is configured to allocate or reserve resources corresponding to the bootstrap DC for a second terminal by the DCSF in a case that the fourth message is used to notify to establish only a bootstrap DC for the second terminal.

According to a thirteenth aspect, a readable storage medium is provided, and the readable storage medium stores a program or instructions, where the program or instructions, when executed by a processor, implement the steps of the method according to the first aspect, or implement the steps of the method according to the second aspect, or implement the steps of the method according to the third aspect, or implement the steps of the method according to the fourth aspect.

According to a fourteenth aspect, a wireless communication system is provided and includes: a terminal and a network-side device, where the terminal is configured to execute the steps of the method according to the first aspect or the second aspect, and the network-side device is configured to execute the steps of the method according to the third aspect or the fourth aspect.

According to a fifteenth aspect, a chip is provided, and the chip includes a processor and a communication interface, where the communication interface and the processor are coupled, the processor is configured to run a program or instructions to implement the method according to the first aspect, or implement the method according to the second aspect, or implement the method according to the third aspect, or implement the method according to the fourth aspect.

According to a sixteenth aspect, a computer program/program product is provided, the computer program/program product is stored in a storage medium, and the program/program product is executed by at least one processor to implement the steps of the method according to the first aspect, or implement the steps of the method according to the second aspect, or implement the steps of the method according to the third aspect, or implement the steps of the method according to the fourth aspect.

In the embodiments of the present application, the first terminal may establish at least one of a bootstrap DC and an application DC by sending a first message and receiving a first response message corresponding to the first message, without establishing a voice, video, or messaging media. This decouples the establishment process of at least one of the bootstrap DC and the application DC from the establishment request process of services such as voice calls, video calls, or short messages services, thereby improving the flexibility of the DC establishment process.

### BRIEF DESCRIPTION OF DRAWINGS

FIG. 1 is a schematic structural diagram of a communication network to which embodiments of the present application can be applied;
FIG. 2A and FIG. 2B are a schematic diagram of an interaction procedure for establishing a bootstrap DC in the related art;
FIG. 3 is a flowchart of a DC establishment method according to an embodiment of the present application;
FIG. 4 is a first flowchart of a message processing method according to an embodiment of the present application;
FIG. 5 is a second flowchart of a message processing method according to an embodiment of the present application;
FIG. 6 is a flowchart of a resource allocation method according to an embodiment of the present application;
FIG. 7a is a schematic diagram of an interaction procedure for establishing a bootstrap DC according to an embodiment of the present application;
FIG. 7b1 and FIG. 7b2 are a first schematic diagram of an interaction procedure for establishing a bootstrap DC and an application DC according to an embodiment of the present application;
FIG. 7c1 and FIG. 7c2 are a second schematic diagram of an interaction procedure for establishing a bootstrap DC and an application DC according to an embodiment of the present application;
FIG. 7d1 and FIG. 7d2 are a third schematic diagram of an interaction procedure for establishing a bootstrap DC and an application DC according to an embodiment of the present application;
FIG. 7e is a fourth schematic diagram of an interaction procedure for establishing a bootstrap DC and an application DC according to an embodiment of the present application;
FIG. 8 is a schematic structural diagram of a DC establishment apparatus according to an embodiment of the present application;
FIG. 9 is a first schematic structural diagram of a message processing apparatus according to an embodiment of the present application;
FIG. 10 is a second schematic structural diagram of a message processing apparatus according to an embodiment of the present application;
FIG. 11 is a schematic structural diagram of a resource allocation apparatus according to an embodiment of the present application;
FIG. 12 is a schematic structural diagram of a communication device according to an embodiment of the present application;
FIG. 13 is a schematic diagram of a hardware structure of a terminal according to an embodiment of the present application; and
FIG. 14 is a schematic structural diagram of a network-side device according to an embodiment of the present application.

### DESCRIPTION OF EMBODIMENTS

The following clearly describes the technical solutions in the embodiments of the present application with reference to the accompanying drawings in the embodiments of the present application. Apparently, the described embodiments are only some rather than all of the embodiments of the present application. All other embodiments obtained by persons of ordinary skill in the art based on the embodiments of the present application shall fall within the protection scope of the present application.

The terms "first", ''second'', and the like in the present application are used to distinguish between similar objects instead of describing a specific order or sequence. It should be understood that terms used in this way are interchangeable in appropriate circumstances so that the embodiments of the present application can be implemented in other orders than the order illustrated or described herein. In addition, "first" and "second" are usually used to distinguish objects of a same type, and do not restrict a quantity of objects. For example, there may be one or a plurality of first objects. In addition, the term "or" in the present application indicates at least one of the connected objects, for example, "A or B" encompasses three scenarios: scenario one, including A but not B; scenario two, including B but not A; and scenario three, including both A and B. The character "/" generally represents an "or" relationship between the associated objects.

The term "indication" in the present application may be either a direct indication (or explicit indication) or an indirect indication (or implicit indication). The direct indication can be understood as the sender explicitly informing the receiver of specific information, operations to be performed, or request results in the sent indication; and the indirect indication can be understood as the receiver determining the corresponding information according to the indication sent by the sender, or making a judgment and determining the operations to be performed or request results according to the judgment result.

It should be noted that technologies described in the embodiments of the present application are not limited to a long term evolution (Long Term Evolution, LTE)/LTE-advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency-Division Multiple Access, SC-FDMA), or other systems. The terms "system" and "network" in the embodiments of the present application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other systems than an NR system, for example, the 6^{th} generation (6^{th} Generation, 6G) communication system.

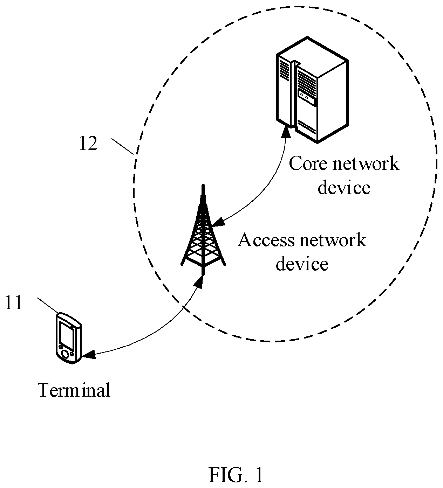

FIG. 1 is a block diagram of a wireless communication system to which the embodiments of the present application are applicable. The wireless communication system includes a terminal 11 and a network-side device 12. The terminal 11 may be a terminal-side device such as a mobile phone, a tablet personal computer (Tablet Personal Computer), a laptop computer (Laptop Computer), a notebook computer, a personal digital assistant (Personal Digital Assistant, PDA), a handheld computer, a netbook, an ultra-mobile personal computer (Ultra-mobile Personal Computer, UMPC), a mobile internet device (Mobile Internet Device, MID), an augmented reality (Augmented Reality, AR) device, a virtual reality (Virtual Reality, VR) device, a robot, a wearable device (Wearable Device), a flight vehicle (flight vehicle), a vehicle user equipment (Vehicle User Equipment, VUE), a ship-borne equipment, a pedestrian user equipment (Pedestrian User Equipment, PUE), a smart home (home devices with a wireless communication function, for example, a refrigerator, a television, a washing machine, or a furniture), a game console, a personal computer (Personal Computer, PC), a teller machine, or self-service machine. The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, or the like. The vehicle user equipment may also be referred to as a vehicle terminal, a vehicle controller, a vehicle module, a vehicle component, a vehicle chip, or a vehicle unit. In addition to the above terminal devices, the terminal 11 may alternatively be a chip within the terminal, such as a modem (Modem) chip or a system on chip (System on Chip, SoC). It should be noted that the embodiments of the present application do not impose any limitation on a specific type of the terminal 11. The network-side device 12 may include an access network device or a core network device, where the access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, or the like. The base station may be referred to as a Node B (Node B, NB), an evolved Node B (Evolved Node B, eNB), the next generation Node B (the next generation Node B, gNB), a new radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home B node (home Node B, HNB), a home evolved B node (home evolved Node B), a transmission reception point (Transmission Reception Point, TRP), or other appropriate terms in the field, provided that the same technical effect is achieved. The base station is not limited to specific technical terms. It should be noted that in the embodiments of the present application, the base station in the NR system is used as an example for introduction, and the specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF) unit, an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), and an application function (Application Function, AF). It should be noted that the embodiments of the present application are described with only the core network device in the NR system as an example, but the core network device is not limited to any specific type.

Additional services may be performed through DC during a call, such as screen sharing, location sharing, and file transfer. Different services correspond to different DC applications. The DC application may be dynamically downloaded to a terminal during a call, without being pre-installed on the terminal, which is user-friendly. In the related art, the establishment of a data channel is performed along with the establishment of services such as voice calls, video calls, or short message services.

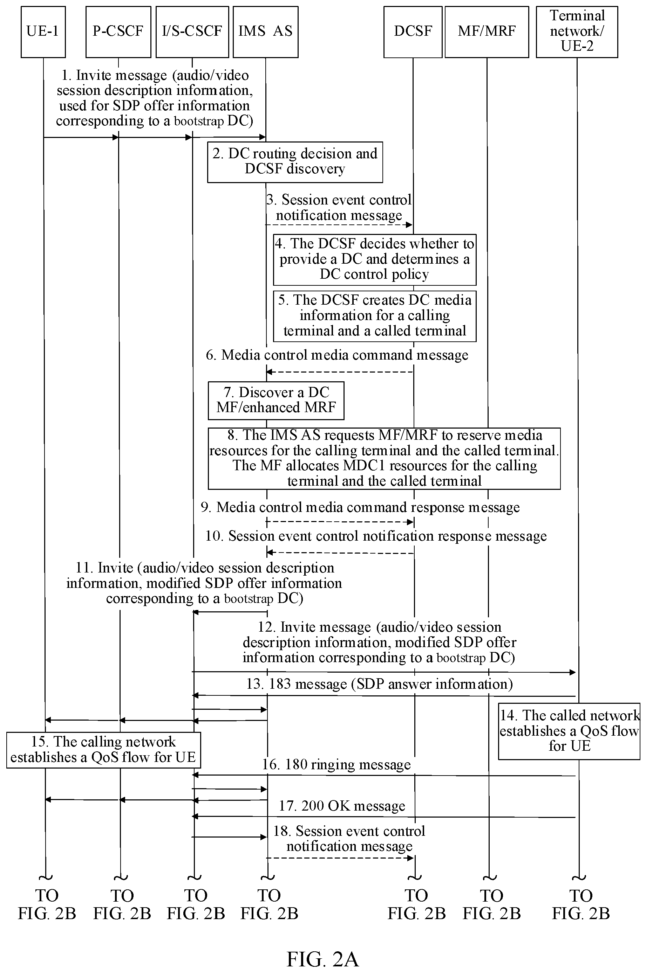

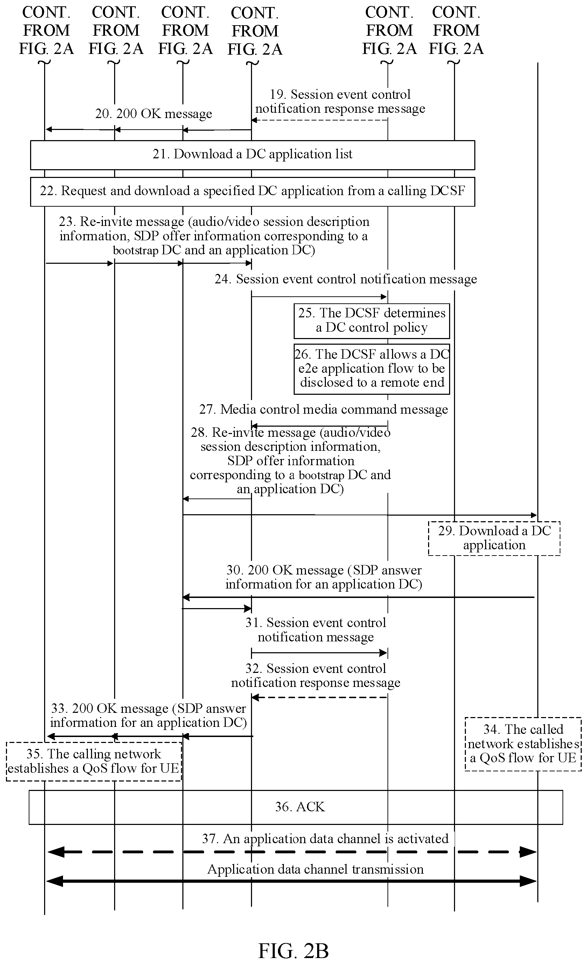

As shown in FIG. 2A and FIG. 2B, the process of establishing a bootstrap DC in the related art includes the following steps:
Step 1: User equipment (User Equipment, UE)-1 initiates a call request to UE-2 by using a session initiation protocol (Session Initiation Protocol, SIP) invite message. The SIP invite message carries a session description protocol (Session Description Protocol, SDP) offer (offer), and the SDP offer is used to describe media description information corresponding to the current call.

It is worth noting that the SDP offer includes voice/video description information and description information for establishing a bootstrap DC. An example of the description information of the Bootstrap DC is as follows:
m=application 52718 UDP/DTLS/SCTP webrtc-datachannel
b=AS:500
a=max-message-size:1024
a=sctp-port:5000
a=dcmap:0 subprotocol="http", where
the m line indicates that the media type is a data channel; the b line indicates that a bandwidth corresponding to the data channel is 500 kbps; and the a line indicates attribute information of the data channel.

Specifically, a=max-message-size:1024 indicates that a maximum message size transmittable by the data channel is 1024 bytes;
a=sctp-port:5000 indicates that the port number corresponding to the data channel is 5000;
a=dcmap:0 subprotocol="http" indicates that a DC application corresponding to the bootstrap DC is provided by a network operator of UE-1; and
0 in the a line is a stream identifier (stream ID), and the stream ID is used to identify a DC. Generally, 0-999 are used to identify a bootstrap DC, and values greater than or equal to 1000 are used to identify an application DC.

The invite message passes through a proxy call session control function (Proxy Call Session Control Function, P-CSCF) and a serving call session control function (Serving CSCF, S-CSCF) that serve UE-1, and is finally routed to an IMS AS that serves UE-1, for example, a telephony application server (Telephony Application Server, TAS).

Step 2: The IMS AS authenticates UE-1 according to the user subscription information. If UE-1 is allowed to use a DC service, the IMS AS selects a DCSF.

Step 3: The IMS AS sends a Nimsas_SessionEventControl_Notify message to the DCSF to notify the DCSF to establish a bootstrap DC.

The Nimsas_SessionEventControl_Notify message carries the following information:
event identifier (Event ID): for example, when a bootstrap DC is established, the Event ID is SessionEstablishmentRequestEvent
calling ID (Calling ID): an ID of UE-1, for example, an IMS Public Identity (IMPU) of UE-1;
called ID (Called ID): an ID of UE-2, for example, an IMPU of UE-2;
session case (Session Case): indicating whether a session (session) is triggered by a calling party or a session is triggered by the called party;
session identifier (Session ID); and
media information list (Media Info List): each piece of media information includes media ID and media attribute information, for example, Media Info corresponding to a bootstrap DC or Media Info corresponding to an application DC.

Step 4: The DCSF decides whether to provide a DC, and determines DC control policy (Policy) information.

Step 5: According to the policy information, the DCSF reserves media information of media data channel (Media Data Channel, MDC) 1 for an originating end (UE-1), and reserves media information of MDC 1 for a terminating end (UE-2).

MDC 1 is an interface between a data channel media function (Data Channel Media Function, MF)/enhanced media resource function (enhance Media Resource Function, enhance MRF) and the DCSF, and is used to transmit media data between the DCSF and the MF/enhance MRF, for example, transmitting installation packages of DC applications, application lists, and graphical user interfaces (graphical user interface).

Step 6: The DCSF sends a Nimsas_MediaControl_MediaInstruction message to the IMS AS to instruct the IMS AS to establish connections with the MF for both communication parties (UE-1 and UE-2).

The Nimsas_MediaControl_MediaInstruction message carries the following information:
session ID, same as the session ID in step 3; and
media instruction set (Media Instruction Set), including: media ID and media instruction; where the media ID is used to uniquely identify one piece of media and is the same as the media ID in step 3; and the media instruction instructs the IMS AS how to process the media, for example, connect (connect) the MF and disconnect (disconnect) the MF.

Step 7: The IMS AS discovers an MF/enhance MRF.

Step 8: The IMS AS sends a Nmf_MediaResourceManagement_Create message to the MF according to an indication (Media Instruction Set) from the DCSF in step 6, where the message includes media resource information reserved for a calling party and media resource information reserved for a called party.

Step 9: The IMS AS sends a response message to the DCSF to notify the DCSF whether resource reservation succeeds, and to provide negotiated data channel media resource information for MDC 1.

Step 10: The DCSF sends a response message.

Step 11: The IMS AS modifies the SDP content sent to UE-2, adds media information of the MF or enhance MRF, and sends the invite message to the S-CSCF.

Step 12: The S-CSCF sends the invite message to UE-2.

Step 13: UE-2 replies with an SDP answer by using a 183 response message, where the 183 message is routed to UE-1.

The SDP answer includes media information of voice and a bootstrap DC determined by UE-2.

Step 14: The network where UE-2 is located establishes a dedicated quality of service flow (Quality of Service flow, QoS flow) for UE-2 for transmitting voice services, and a dedicated QoS flow for transmitting a bootstrap DC.

Step 15: The network where UE-1 is located establishes a dedicated QoS flow for UE-1 for transmitting voice services, and a dedicated QoS flow for transmitting a bootstrap DC.

Step 16: After the dedicated QoS flow of UE-2 is established, UE-2 sends a 180 message to UE-1 and starts ringing.

Step 17: When a user of UE-2 answers the incoming call, UE-2 sends a 200 OK message.

Step 18: The IMS AS sends a notification message to the DCSF to notify that the session is successfully established.

Step 19: The DCSF sends a response message.

Step 20: The IMS AS sends a 200 OK message to UE-1.

Step 21: UE-1 downloads a DC application list (application list) through the bootstrap DC.

Step 22: When the user of UE-1 selects one application from the DC application list for use, UE-1 downloads the DC application through the bootstrap DC.

Step 23: UE-1 initiates a request to establish an application DC by using a re-invite (re-Invite) message. The application DC is used to transmit data corresponding to the downloaded DC application.

The SDP offer in the above re-invite message carries voice/video description information, description information of an established bootstrap DC, and description information of an application DC to be established. The description information of the application DC to be established includes application information such as an application ID.

Step 24: The IMS AS sends a notification message to the DCSF.

Step 25: The DCSF determines how to establish the application DC according to the notification message.

Step 26: The DCSF determines whether to allow UE-1 and UE-2 to establish the application DC, and whether to insert the MF to the application DC.

Step 27: The DCSF instructs the IMS AS how to process media.

Step 28: If the MF does not need to be inserted to the application DC, the IMS AS directly sends the re-invite message to UE-2.

Step 29: UE-2 determines, based on the content of the application DC in the SDP offer, the DC application that UE-1 requests to use.

It should be noted that in this step, when UE-2 determines that the DC application is not downloaded, UE-2 downloads the DC application through the bootstrap DC.

Step 30: UE-2 replies with a 200 OK message.

Step 31: The IMS AS sends a notification message to the DCSF to notify that the application DC is successfully established.

Step 32: The DCSF sends a response message.

Step 33: The IMS sends a 200 OK message to UE-1.

Step 34: Optionally, a called network side establishes a QoS flow corresponding to the application DC for UE-2.

Step 35: Optionally, a calling network side establishes a QoS flow corresponding to the application DC for UE-1.

It should be noted that steps 34 and 35 are optional steps. Specifically, if the DC application has high requirements for data transmission quality, a dedicated QoS flow needs to be established. If the requirements are low, a QoS flow corresponding to the bootstrap DC may be used for data transmission.

Step 36: UE-1 replies with an acknowledgement (Acknowledgement, ACK) message.

Step 37: The application DC is activated, and the DC application can transmit data by using the application DC.

Based on the procedure of establishing a bootstrap DC in the related art, it can be seen that establishment of a DC in the related art is performed along with establishment of services such as voice calls, video calls, or short message services, and independent establishment of a DC cannot be implemented.

In the embodiments of the present application, an establishment procedure of at least one of a bootstrap DC and an application DC is decoupled from a voice or video call request. In this way, at least one of a bootstrap DC and an application DC of a calling UE and a called UE can be established even before the calling UE initiates an outgoing voice or video call request, thereby making the establishment procedure of the bootstrap DC and the application DC more flexible.

The DC establishment method, the message processing method, the resource allocation method, and related devices provided in the embodiments of the present application are described in detail below with reference to the accompanying drawings by using some embodiments and application scenarios thereof.

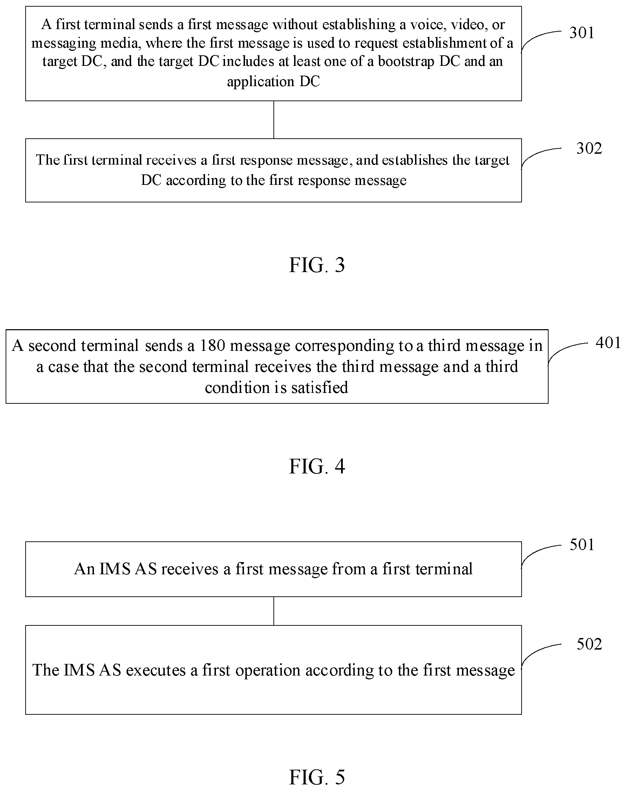

Referring to FIG. 3, an embodiment of the present application provides a DC establishment method, where an execution body is a first terminal. As shown in FIG. 3, the DC establishment method includes the following steps:

Step 301: The first terminal sends a first message without establishing a voice, video, or messaging media, where the first message is used to request establishment of a target DC, and the target DC includes at least one of a bootstrap DC and an application DC.

The bootstrap DC is used to download a DC application from a data channel server (for example, DCSF). The application DC is used to transmit data of the DC application.

It should be noted that the DC application in the embodiments of the present application may also be called an application (application, APP).

Step 302: The first terminal receives a first response message, and establishes the target DC according to the first response message.

In some implementations, the first message may include at least one of an invite message, a re-invite message, and an update (Update) message.

In some implementations, the sending, by the first terminal, a first message may be that the first terminal may send at least one of an invite message, a re-invite message, and an update message to a second terminal, where the first terminal represents a calling terminal, and the second terminal represents a called terminal.

In some implementations, the sending, by the first terminal, a first message may be that: the first terminal sends an invite message to a specific target address, where the specific target address may be a preset special number, such as a customer service phone number of a communication operator, a phone number of the first terminal, a phone number of the DCSF, a phone number of the IMS AS, and a public service identity (Public Service Identity, PSI) for indicating establishment of only a bootstrap DC. The phone number may also be understood as a number, a SIP uniform resource identifier (Uniform Resource Identifier, URI), an IP multimedia public identity (IP Multimedia Public Identity, IMPU), or PSI.

It should be noted that a bootstrap DC established without establishing a voice, video, or messaging media may also be understood as or replaced by a standalone (standalone) bootstrap DC; and an application DC established without establishing a voice, video, or messaging media may also be understood as or replaced by a standalone application DC.

It should be noted that establishing only a bootstrap DC may also be understood as or replaced by a standalone bootstrap DC.

It should be noted that a PSI for indicating establishment of only a bootstrap DC may also be understood as or replaced by a PSI for indicating a standalone bootstrap DC (PSI indicating standalone bootstrap DC).

In some implementations, the first response message is a response message to the above first message, and the first response message may carry information for the first terminal to establish the target DC. For example, the first message may carry an SDP offer for establishing a bootstrap DC, and the first response message may carry an SDP answer for establishing a bootstrap DC.

It should be noted that a type of the first response message is related to a type of the first message and a destination address of the first message. For example, in a case that the first message is an invite message sent to a preset special number, the first response message may include a 183 message or a 200 OK message from the IMS AS, where the 183 message or 200 OK message carries an SDP answer.

In addition, in the embodiments of the present application, the first terminal requests establishment of the target DC through the first message without establishing a voice, video, or messaging media, does not need to request establishment of a DC based on an establishment procedure of services such as voice, video calls, or short message services. In this way, an establishment process of the target DC is decoupled from an establishment request process of services such as voice calls, video calls, or short message services, thereby improving the flexibility of the DC establishment process.

It is worth proposing that to implement independent establishment of a DC, voice/video description information carried in an SDP offer in a SIP invite message in the related art may be deleted, and only description information for establishing a bootstrap DC is retained. However, this solution has the following defects:
(1) A calling UE can download a DC application list through a bootstrap DC and select a DC application only after sending a SIP invite request to a communication peer, that is, the calling UE cannot determine available DC applications or select a DC application to be used before initiating the SIP invite request, which degrades the user experience of the calling UE.
(2) A called UE can determine a DC application to be used only after receiving the SIP invite request and waiting for the calling UE to complete selection of the DC application, that is, the called UE does not know the DC application expected by the calling UE during ringing, which degrades the user experience of the called UE.

In the embodiments of the present application, by independently requesting establishment of the target DC without establishing a voice, video, or messaging media, for the calling UE, at least one of the bootstrap DC and the application DC of the calling UE may be established before sending a SIP invite request to the communication peer, and a DC application list may be downloaded, so that a user can learn available DC applications or select the DC application to be used before initiating the request to the communication peer. For example, the DC application list is displayed on a user interface (User Interface, UI) for the user to select a DC application for communication with the communication peer. By independently requesting establishment of the target DC, for the called UE, the bootstrap DC may be established before ringing, or in a case that the calling UE selects a DC application, the DC application may be downloaded before ringing and an application DC corresponding to the DC application may be established before ringing. In this way, after the calling UE initiates the SIP invite request to the called UE, the waiting duration for the calling UE and the called UE to transmit data of the DC application by using the application DC may be reduced, thereby improving the user experience.

As an optional implementation, the target DC includes a bootstrap DC, and the sending, by the first terminal, first message includes:
sending, by the first terminal, a first invite message to a specific target address, where the first invite message carries SDP offer information used to establish the bootstrap DC.

In some implementations, the specific target address may be a preset special number, for example, a communication operator number or a communication number of the first terminal, which is not specifically limited herein.

In this implementation, the first terminal may establish the bootstrap DC for the first terminal by sending the first invite message to the specific target address.

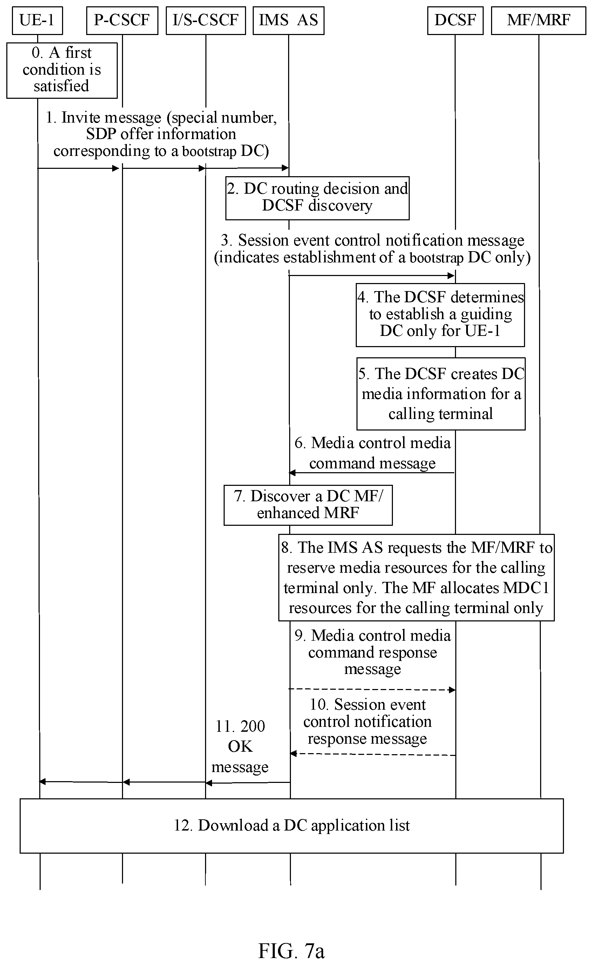

For example, as shown in FIG. 7a, assuming the first terminal is UE-1, UE-1 sends an invite message to a preset special number, where the invite message carries an SDP offer for a bootstrap DC. In this case, the IMS AS authenticates UE-1 according to the subscription of UE-1. If UE-1 is allowed to use a DC service, the IMS AS selects a DCSF and sends a Nimsas_Session Event Control_Notify message to the selected DCSF. The DCSF reserves media information of MDC 1 for UE-1 according to the received Nimsas_Session Event Control_Notify message, and instructs the IMS AS to establish a connection with the MF for UE-1. The IMS AS discovers an MF/enhance MRF according to the instruction of the DCSF, and instructs the MF to reserve the media resource information for UE-1. Finally, the IMS AS sends a 200 OK message to UE-1, where the 200 OK message carries an SDP answer.

Optionally, the first invite message further carries first indication information, where the first indication information is used to indicate establishment of only a bootstrap DC.

In this implementation, the network side may be explicitly instructed, by using the first indication information, to establish only the bootstrap DC for the terminal.

Certainly, in a case that the first invite message does not include the first indication information, the network side may also learn, according to that the first invite message carries only SDP offer information corresponding to a bootstrap DC and does not carry SDP offer information for an application DC, that the first invite message is only used for requesting establishment of the bootstrap DC. Alternatively, the network side may also learn, according to a preset special called number, that the first invite message is only used for requesting establishment of a bootstrap DC instead of requesting establishment of an application DC.

Optionally, the sending, by the first terminal, a first message includes:
sending, by the first terminal, the first message in a case that a first condition is satisfied; where
the first condition includes at least one of the following:
   the first terminal is powered on;
   the first terminal disables or turns off airplane mode;
   the first terminal completes IMS registration or IMS re-registration;
   a dialer application (application, APP) of the first terminal is started; and
   a preset APP of the first terminal is started, where the preset APP is used to establish the target DC. For example, the preset APP is used for the user to select a DC application from a DC application list and establish an application DC.

In this implementation, the first terminal may initiate an establishment procedure of the target DC when being powering on, disabling or turning off an airplane mode, completing IMS registration or IMS re-registration, starting a dialer application APP, starting a preset APP, without initiating the establishment procedure of the target DC along with an establishment request of a service such as a voice call, a video call, or a short message service.

As an optional implementation, in a case that the target DC includes a bootstrap DC, the method further includes:
the first terminal downloads an application list (application list) based on the bootstrap DC.

In some implementations, the application list may be a list of DC applications.

In this implementation, after the bootstrap DC is established, the DC application list may be downloaded by using the bootstrap DC. Since the bootstrap DC may be established before initiating a request to a communication peer, the DC application list may be downloaded before initiating a request to the communication peer, for a user to select a DC application to be used with the communication peer.

For example, before a user of the first terminal dials, such as during powering on, an establishment procedure of a bootstrap DC may be initiated. After the bootstrap DC is established, an application list (that is, the DC application list) may be downloaded by using the bootstrap DC. When the user needs to initiate a request to the communication peer, the DC application list available to the first terminal may be displayed on a dialing interface, for the user to select a DC application for communication with the communication peer in a subsequent process.

In some implementations, the method further includes:
downloading, by the first terminal, a first DC application from the application list based on the bootstrap DC.

In some implementations, the first DC application may be one or at least two commonly used DC applications in the application list. For example, the first terminal downloads, based on the bootstrap DC, DC applications with a relatively high usage frequency in the application list or DC applications marked by the network for default download.

In some implementations, the first DC application may include a DC application selected by a user from the application list. For example, the first DC application may include a DC application selected by the user for communication with a communication peer in a subsequent process.

In this implementation, one or at least two first DC applications may be pre-downloaded, so that when the first DC application is used subsequently, waiting duration for downloading the first DC application may be reduced.

As an optional implementation, the method further includes:
terminating, by the first terminal, the bootstrap DC.

In some implementations, the bootstrap DC may be released after at least one of the application list and the first DC application is downloaded.

In some other implementations, the bootstrap DC may be released in a case that the bootstrap DC is not used for a long time.

For example, the terminating, by the first terminal, the bootstrap DC includes:
terminating, by the first terminal, the bootstrap DC in a case that a second condition is satisfied, where the second condition includes at least one of the following:
the first terminal does not use the bootstrap DC to send message or data upon expiry of a first timer; and
the first terminal does not initiate a request message for establishing an application DC upon expiry (expire) of the first timer; where
the first timer is started when the first terminal successfully establishes the bootstrap DC, or started after the first terminal downloads the application list, or started after downloading a first DC application.

In this implementation, after the bootstrap DC is established, the bootstrap DC may be released to reduce resource consumption and power consumption caused by maintaining the bootstrap DC.

The above implementations are mainly described for an application scenario of establishing a one-sided bootstrap DC for the first terminal. For an establishment procedure of a bootstrap DC and an application DC between the first terminal and the second terminal, the following four cases may be distinguished:
Case 1: The first terminal obtains an DC application list in advance, and the first terminal does not establish a bootstrap DC or has released an established bootstrap DC. In this case, after determining the DC application to be used with a communication peer, the first terminal may request to establish the bootstrap DC again, so that the first terminal and the second terminal may download the DC application by using the established bootstrap DC, and the network side may initiate an establishment procedure of an application DC corresponding to the DC application based on the above request for establishing the bootstrap DC.
Case 2: The first terminal has obtained in advance a DC application to be used with a communication peer, and the first terminal does not establish a bootstrap DC or has released an established bootstrap DC. In this case, the first terminal determines that the DC application to be used with the communication peer has been downloaded, and may request to establish a bootstrap DC and an application DC again, so that the second terminal may download the DC application by using the established bootstrap DC, and the first terminal and the second terminal may exchange application data of the DC application by using the established application DC.
Case 3: The first terminal has obtained in advance the DC application to be used with a communication peer. In this case, the first terminal determines that the DC application to be used with the communication peer has been downloaded, and may send SDP offer information of the application DC and information for downloading a DC application to the second terminal, so that the second terminal initiates an establishment procedure of the bootstrap DC according to the information for downloading a DC application, downloads the DC application based on the established bootstrap DC, and establishes an application DC between the first terminal and the second terminal based on the SDP offer information of the application DC, so that the first terminal and the second terminal may exchange application data of the DC application by using the established application DC.
Case 4: The first terminal has established the bootstrap DC, and the bootstrap DC is available. In this case, after determining that the DC application to be used with a communication peer has been downloaded, the first terminal may send a re-invite message carrying the bootstrap DC and the application DC to the second terminal. In this case, a network-side device (such as the IMS AS) may determine, based on an indication in the re-invite message or based on that the first terminal has established the bootstrap DC, that SDP offer information of the bootstrap DC in the re-invite message is only used to establish the bootstrap DC for the second terminal instead of establishing a bootstrap DC for the first terminal, so that the second terminal downloads, based on the established bootstrap DC, a DC application to be used. Then, the network-side device may establish an application DC between the first terminal and the second terminal based on SDP offer information of the application DC in the re-invite message, so that the first terminal and the second terminal may exchange application data of the DC application by using the established application DC.

It is worth noting that, in some implementations, in the above four cases, a manner in which the first terminal obtains the DC application list or DC application in advance may be as follows: the first terminal sends a first invite message to a specific target address as in the above embodiments, so that the network-side device establishes a one-sided bootstrap DC for the first terminal, and the first terminal downloads the DC application list or DC application based on the one-sided bootstrap DC.

Certainly, the first terminal may also obtain the DC application list or DC application in advance in other manners, for example, a network side pre-configures the DC application list or some DC applications to the first terminal; or the DC application list or some DC applications are pre-configured locally on the first terminal side.

The above four cases are specifically described below:

### Case 1:

As an optional implementation, the target DC includes a bootstrap DC and an application DC, and the sending, by the first terminal, a first message includes:
sending, by the first terminal, a second invite message to a second terminal, where the second invite message carries first SDP offer information, and the first SDP offer information is used to establish the bootstrap DC; and
sending, by the first terminal, a second message to the second terminal in a case that first SDP answer information is received, where the second message carries second SDP offer information, the first SDP answer information is SDP answer information corresponding to the first SDP offer information, and the second SDP offer information is used for establishing the application DC.

In some implementations, the first message includes the second invite message and the second message.

In some implementations, the first response message may include a response message carrying the first SDP answer information and a response message carrying second SDP answer information corresponding to the second SDP offer information.

In some implementations, the type of the second message is related to the type of the first response message.

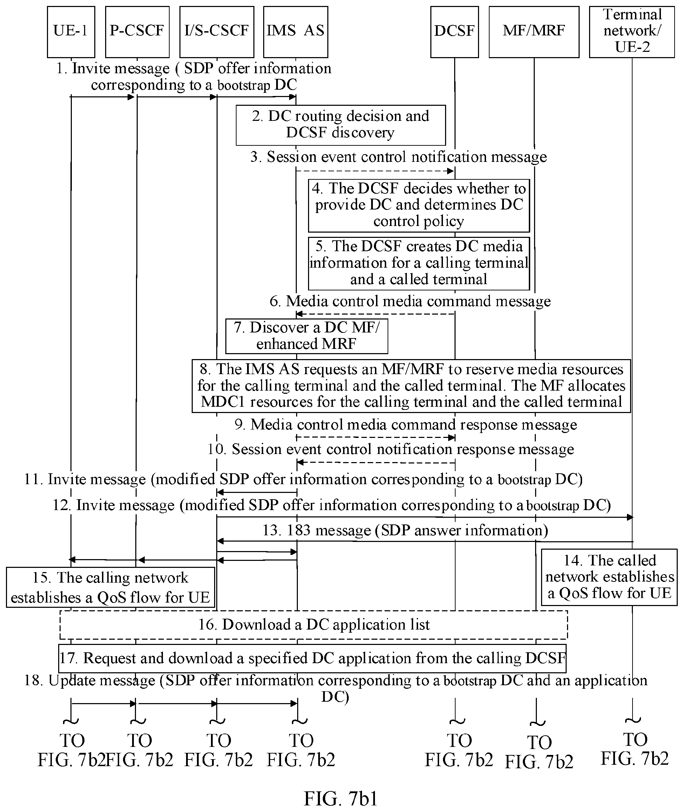

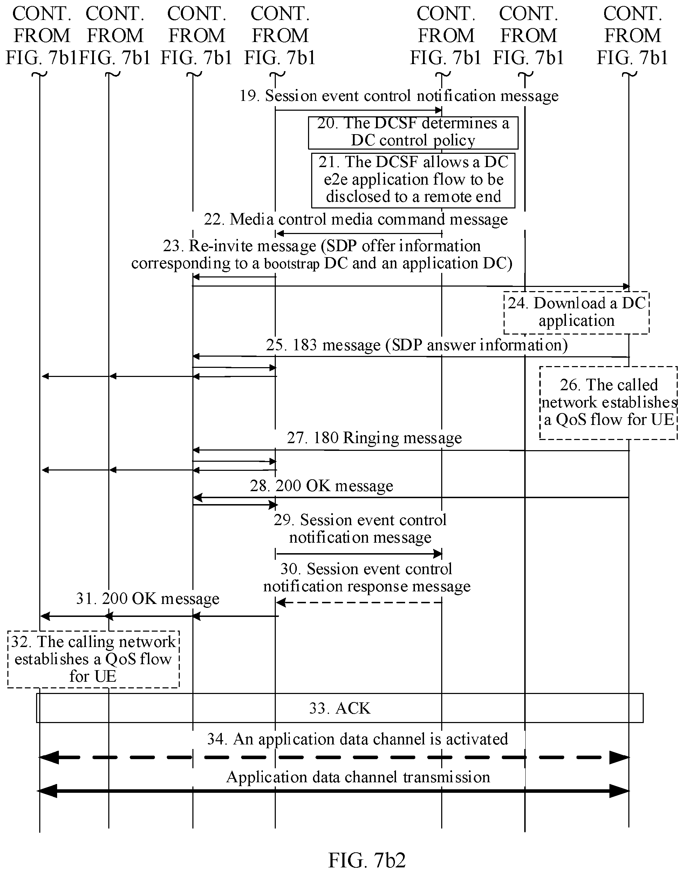

For example, the sending, by the first terminal, a second message to the second terminal in a case that the first SDP answer information is received includes:
as shown in steps 13 and 18 of FIG. 7b1 and FIG. 7b2, sending, by the second terminal, an update (Update) message in a case that the first terminal receives a 183 response message carrying the first SDP answer information; or
sending, by the second terminal, a re-invite (re-Invite) message in a case that the first terminal receives a 200 OK message carrying the first SDP answer information.

It should be noted that in the embodiments of the present application, the sending, by the first terminal, a message to the second terminal may be that: sending, by the first terminal, a message with the second terminal as a destination address. For example, when the first terminal sends a message with the second terminal as the destination address, the message is processed by the network-side device and then forwarded to the second terminal.

In some implementations, after determining to establish an application DC corresponding to a DC application with the second terminal, the first terminal may send a second invite message to the second terminal, where the second invite message is used to request establishment of the bootstrap DC.

In some implementations, the first terminal establishes the bootstrap DC in a case that the first SDP answer information is received. Thereafter, the first terminal may download, by using the bootstrap DC, the DC application used for establishing the application DC with the second terminal.

Optionally, the first terminal may obtain the DC application list in advance and select, based on a user operation, the DC application used for establishing the application DC with the second terminal.

In some implementations, the first terminal may establish the bootstrap DC by sending a first invite message to a specific target address, and download the DC application list based on the established bootstrap DC.

Certainly, the first terminal may also obtain the DC application list in advance in other manners. For example, a network side pre-configures the DC application list in the first terminal.

For the situation in which the first terminal establishes the bootstrap DC by sending a first invite message to a specific target address and downloads the DC application list based on the established bootstrap DC, the application scenario of this implementation is: the bootstrap DC has been released, and the first terminal has not downloaded the DC application used for establishing the application DC with the second terminal.

In some implementations, the second SDP offer information includes SDP offer information of the bootstrap DC and the application DC.

It should be noted that in this implementation, after receiving the first SDP offer information, the second terminal does not reply with a 180 ringing message, and does not output an incoming call prompt message, but only replies with the first SDP answer information according to the first SDP offer information. At this point, the first terminal and the second terminal complete the negotiation and establishment process of the bootstrap DC. Thereafter, the first terminal and the second terminal may download, based on the established bootstrap DC, the DC application to be used with the communication peer.

In this implementation, in a case that the first terminal has obtained the DC application list in advance and selected, based on a user operation, the DC application to be used with the communication peer, the first terminal sends the second invite message first, and establishes the bootstrap DC between the first terminal and the second terminal according to the first SDP answer information sent by the second terminal and modified and forwarded by the network-side device (IMS AS). After the bootstrap DC is established, the first terminal sends a second message carrying the second SDP offer information to the second terminal to request establishment of the application DC.

### Case 2

As an optional implementation, the target DC includes a bootstrap DC and an application DC, and the sending, by the first terminal, a first message includes:
sending, by the first terminal, a third invite message to a second terminal, where the third invite message carries third SDP offer information, and the third SDP offer information is used to establish the bootstrap DC and the application DC.

In some implementations, when the network-side device receives the third invite message, it may first establish the bootstrap DC between the first terminal and the second terminal based on the SDP offer information for the bootstrap DC in the third invite message, and after the second terminal replies with the SDP answer information corresponding to the bootstrap DC, establish the application DC between the first terminal and the second terminal based on the SDP offer information for the application DC in the third invite message.

Optionally, after the bootstrap DC is established, the second terminal may determine, based on the content of the application DC in the third SDP offer information, the DC application that the first terminal requests to use, and when the DC application has not been downloaded, download the DC application by using the established bootstrap DC.

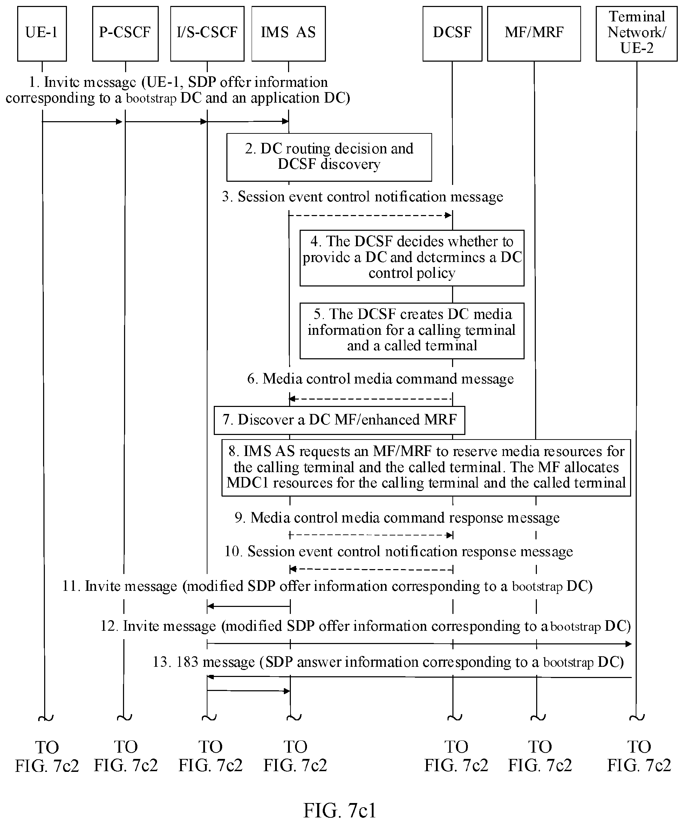

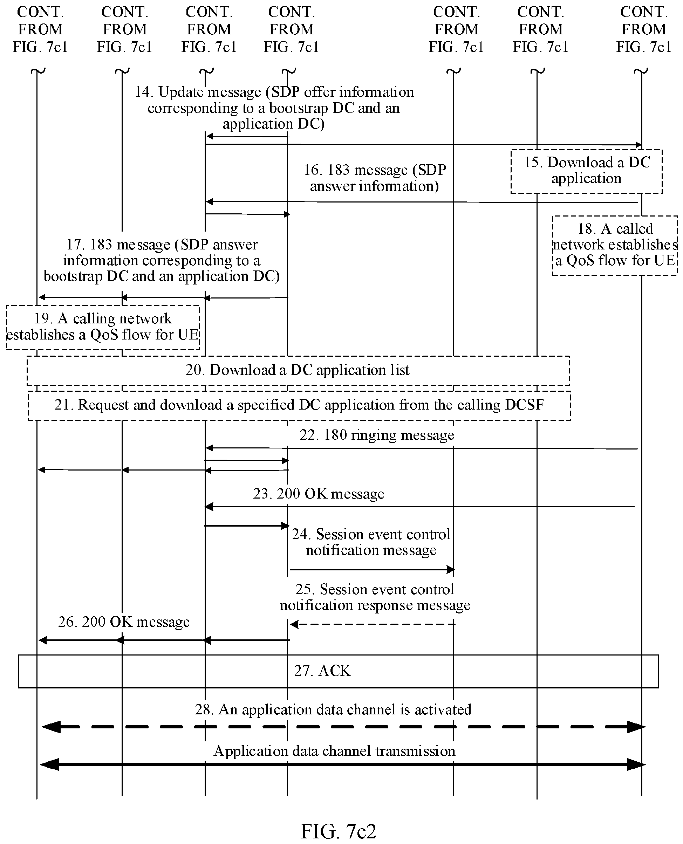

For example, as shown in FIG. 7c1 and FIG. 7c2, in step 1, the first terminal sends the third invite message; in steps 2 to 12, a network side allocates resources for the bootstrap DC between the first terminal and the second terminal; and in step 13, the second terminal replies with SDP answer information, where the SDP answer information includes media information of the bootstrap DC determined by the second terminal. Thereafter, the IMS AS may send SDP offer information of the bootstrap DC and the application DC to UE-2 by using an update message or a 200 OK message, so that the second terminal determines, based on the content of the application DC in the SDP offer, the DC application that the first terminal requests to use, establishes an application DC for transmitting application data of the DC application, and replies with SDP answer corresponding to the bootstrap DC and the application DC.

In some implementations, the method further includes:
initiating, by the first terminal, a procedure of downloading a DC application in a case that a second response message carrying third SDP answer information is received, where the third SDP answer information is SDP answer information corresponding to the third SDP offer information.

The third SDP answer information includes SDP answer information for the bootstrap DC.

For example, assuming the first terminal is UE-1, as shown in step 17 of FIG. 7c1 and FIG. 7c2, the IMS sends SDP answer corresponding to the bootstrap DC and the application DC to UE-1. The SDP answer for the bootstrap DC includes resources reserved by the MF for UE-1. In this way, UE-1 may establish the bootstrap DC based on the resources reserved by the MF for UE-1, and download, based on the established bootstrap DC, the DC application to be used with the communication peer.

In this implementation, in a case that the first terminal has not downloaded the DC application to be used with the communication peer, the first terminal may download the DC application based on the SDP answer information for the bootstrap DC.

Optionally, the second response message includes at least one of the following:
183 message;
180 message; and
200 OK message.

In some implementations, as shown in step 17 of FIG. 7c1 and FIG. 7c2, the IMS sends a 183 message carrying SDP answer corresponding to the bootstrap DC and the application DC to UE-1.

In some other implementations, the second terminal may reply with SDP answer corresponding to the bootstrap DC and the application DC by using a 180 message or a 200 OK message. In this case, the network side modifies the 180 message or 200 OK message, and then forwards the modified message to the first terminal.

It is worth noting that when the second terminal replies with SDP answer corresponding to the bootstrap DC and the application DC by using a 180 message, the second terminal may output an incoming call prompt message, for example, playing an incoming call prompt tone and displaying an incoming call prompt interface.

In this implementation, in a case that the first terminal has obtained the DC application list in advance and selects, based on a user operation, the DC application to be used with the communication peer, the first terminal may initiate an establishment procedure of the bootstrap DC and the application DC by sending the third invite message. Compared with the implementation described in Case 1, this manner simplifies the interaction procedure of the first terminal.

### Case 3

As an optional implementation, the target DC includes an application DC, and the sending, by the first terminal, a first message includes:
sending, by the first terminal, a fourth invite message to a second terminal, where the fourth invite message carries fourth SDP offer information and information for downloading a DC application, the fourth SDP offer information is used for establishing the application DC, and the first terminal has downloaded the DC application using a bootstrap DC.

In some implementations, the information for downloading a DC application is used to guide the second terminal to establish the bootstrap DC or download the DC application.

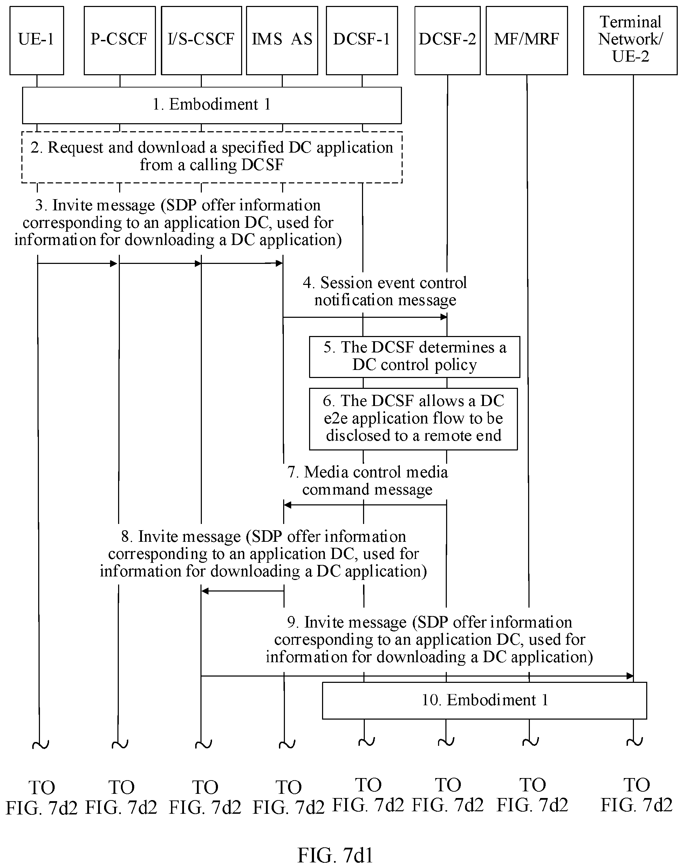

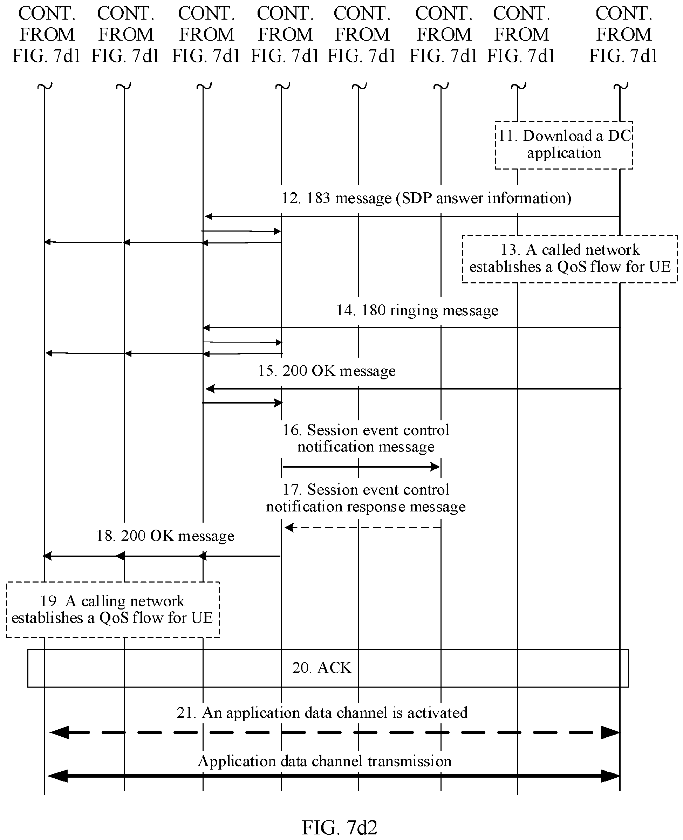

For example, as shown in FIG. 7d1 and FIG.7d2, in a case that DCSF-1 establishes the bootstrap DC for the first terminal so that the first terminal downloads the DC application based on the bootstrap DC, the first terminal sends, in step 3, SDP offer information for establishing the application DC and information for downloading a DC application. In steps 8 to 10, the second terminal may establish the bootstrap DC with DCSF-1 according to the information for downloading a DC application, so that the second terminal may determine, based on the SDP offer information of the application DC, the DC application to be downloaded from DCSF-1.

Optionally, the information for downloading a DC application includes at least one of the following:
SDP information of the bootstrap DC;
a specific target address used by the first terminal to download the DC application;
an address of a data channel signaling function DCSF corresponding to the DC application;
an identifier allocated to the first terminal by the DCSF corresponding to the DC application; and
a stream identifier (Stream ID) used by the first terminal to establish the bootstrap DC.

In some implementations, the stream identifier (Stream ID) used by the first terminal to establish the bootstrap DC is used to identify a source of the DC application saved in the DCSF.

There are two sources of the DC application saved in the DCSF:
(1) local network provider (Local network provider); and
(2) local user (Local user), that is, a user who creates and uploads the DC application.

For example, a correspondence between stream ID and DC application source is shown in Table 1 below:

**Table 1**

| Stream ID | Content source (Content source) |
|---|---|
| 0 | 1. Local network provider |
| 10 | 2. Local user |
| 100 | 3. Remote network provider (Remote network provider) |
| 110 | 4. Remote user |

In one implementation, when the stream ID used by the terminal to establish the bootstrap DC is 10, it indicates downloading the DC application of the local user from the DCSF; and when the stream ID is 0, it indicates downloading the DC application of the local network provider from the DCSF.

In this implementation, the second terminal downloads the corresponding DC application according to the identifier allocated to the first terminal by the DCSF corresponding to the DC application and the stream ID used by the first terminal to establish the bootstrap DC. For example, assuming the first terminal is UE-1 and the second terminal is UE-2, if UE-1 downloads the DC application of the local user, UE-2 needs to indicate downloading the DC application of the Local user by using the identifier of UE-1 and the stream ID during downloading.

In another implementation, the stream ID used by the second terminal to establish the bootstrap DC may be 10 or 110, where 10 indicates a local user of the first terminal; and 110 indicates a remote user (Remote user) relative to the second terminal.

In some implementations, at least part of the information in the information for downloading a DC application may be determined by the first terminal according to related information about establishing the bootstrap DC or downloading the DC application.

In some other implementations, at least part of the information in the information for downloading a DC application may be provided by the DCSF corresponding to the bootstrap DC.

For example, the method further includes:
receiving, by the first terminal, first information from a first DCSF, where the first DCSF is used to establish the bootstrap DC for the first terminal, and the first information includes at least one of the following:
an address of the first DCSF; and
an identifier allocated to the first terminal by the first DCSF.

In some implementations, the DCSF configured to establish the application DC between the first terminal and the second terminal is a second DCSF, where the second DCSF and the first DCSF may be the same or different DCSFs.

In this implementation, the first terminal sends information for downloading the DC application to the second terminal, so that the second terminal may initiate an establishment procedure of the bootstrap DC according to the information for downloading a DC application, and download the DC application based on the established bootstrap DC; and the first terminal does not need to initiate an establishment procedure of the bootstrap DC. In addition, a function of the first terminal sending, to the second terminal, SDP offer information used for establishing the application DC is the same as a function of the SDP offer information for establishing the application DC in Case 2, and details are not repeated herein.

### Case 4

As an optional implementation, the target DC includes an application DC, and the sending, by the first terminal, a first message includes:
sending, by the first terminal, a re-invite message to a second terminal, where the re-invite message carries fifth SDP offer information, and the fifth SDP offer information is used for establishing the application DC.

In some implementations, the fifth SDP offer information may include SDP offer information of the application DC and the bootstrap DC, and the re-invite message may carry an indication to establish only the bootstrap DC for the second terminal, that is, an indication not to establish the bootstrap DC for the first terminal. In this way, the network-side device may establish only the bootstrap DC for the second terminal according to the indication, so that the second terminal downloads the DC application based on the established bootstrap DC. In addition, the network-side device also establishes the application DC between the first terminal and the second terminal, so that the first terminal and the second terminal exchange application data of the DC application through the application DC.

In some other implementations, the fifth SDP offer information may include SDP offer information of the application DC and the bootstrap DC. In this case, the network-side device may establish only the bootstrap DC for the second terminal based on the fact that the first terminal already has an available bootstrap DC, and not establish the bootstrap DC for the first terminal, so that the second terminal downloads the DC application based on the established bootstrap DC. In addition, the network-side device also establishes the application DC between the first terminal and the second terminal, so that the first terminal and the second terminal exchange application data of the DC application through the application DC.

In this implementation, in a case that the bootstrap DC established by the first terminal is available, the first terminal sends a re-invite message, so that the network side establishes only the bootstrap DC for the second terminal instead of for the first terminal, and establishes the application DC between the first terminal and the second terminal.

Referring to FIG. 4, an embodiment of the present application provides a message processing method, where an execution body is a second terminal. As shown in FIG. 4, the message processing method includes the following step:

Step 401. The second terminal sends a 180 message corresponding to a third message in a case that the second terminal receives the third message and a third condition is satisfied, where the third message is used to request establishment of a target data channel DC, and the target DC includes at least one of a bootstrap DC and an application DC; and
the third condition includes at least one of the following:
the third message is used to request establishment of an application DC;
the second terminal successfully downloads a DC application corresponding to the application DC; and
the second terminal successfully establishes a bearer corresponding to the application DC.

In some implementations, the third message corresponds to the first message in the method embodiment on the first terminal side, where the first message is a message sent by the first terminal. After the first message is processed by a network side (such as the IMS AS modifies the SDP content or adds media information of the MF or enhance MRF), the processed first message is sent to the second terminal. In this case, the processed first message is the third message.

Optionally, the third message includes at least one of the following:
invite message, re-invite message, and update message.

In some implementations, the bearer corresponding to the application DC may include a QoS flow or an evolved packet system bearer (Evolved Packet System bearer, EPS bearer).

Optionally, the method further includes:
outputting, by the second terminal, an incoming call prompt message.

In this implementation, after sending the 180 message corresponding to the third message, the second terminal may output an incoming call prompt message to implement an incoming call reminder function.

In some implementations, in a case that the third condition is not satisfied, for example, when the second terminal receives a third message used to request establishment of the bootstrap DC, the second terminal may not send the 180 message, and may not output an incoming call prompt message, such as incoming call ringing and incoming call display.

For example, assuming the second terminal is UE-2, as shown in steps 12 and 13 of FIG. 7b1 and FIG. 7b2, in a case that UE-2 receives an invite message and the invite message carries SDP offer information used to establish the bootstrap DC, UE-2 replies with a 183 message, where the 183 message carries SDP answer information used for the bootstrap DC.

In the embodiments of the present application, the second terminal may reply with the 180 message only when receiving an invite message, re-invite message, or update message used to establish the DC application, or after downloading the DC application selected by the first terminal, or after completing establishment of the QoS flow corresponding to the application DC, that is, outputting a reminder (incoming call) message to a user of the second terminal.

As an optional implementation, the third message carries information for downloading a DC application, and the method further includes:
establishing, by the second terminal, a bootstrap DC according to the information for downloading a DC application; and
downloading, by the second terminal, the DC application based on the established bootstrap DC.

Optionally, after the second terminal downloads the DC application, the second terminal may execute an establishment procedure of the application DC according to the DC application.

Optionally, the information for downloading a DC application includes at least one of the following:
SDP information of the bootstrap DC;
a specific target address used by a first terminal to download the DC application;
an address of a data channel signaling function DCSF corresponding to the DC application;
an identifier allocated to the first terminal by the DCSF corresponding to the DC application; and
a stream identifier used by the first terminal to establish the bootstrap DC.

The information for downloading a DC application has the same meaning and function as the information for downloading a DC application in the method embodiment on the first terminal side, and details are not repeated herein.

Optionally, if the user selects to reject a call after the second terminal outputs an incoming call message to the user, the second terminal immediately deletes the downloaded DC application locally or retains the downloaded DC application for a period of time before deleting the downloaded DC application.

Optionally, if the user selects to answer a call after the second terminal outputs an incoming call message to the user, the second terminal may immediately delete the downloaded DC application locally or retain the downloaded DC application for a period of time before deleting the downloaded DC application after the call ends.

For example, in the embodiment shown in FIG. 7d1 and FIG. 7d2, the first terminal sends an invite message carrying information for downloading a DC application to the second terminal (that is, the fourth invite message in the method embodiment on the first terminal side), so that the DCSF storing the DC application establishes a bootstrap DC for the second terminal. Thereafter, the second terminal may download the same DC application from the DCSF based on the information for downloading a DC application.

In some implementations, the establishing, by the second terminal, a bootstrap DC according to the information for downloading a DC application includes:
sending, by the second terminal, a provisional response message and establishing the bootstrap DC according to the SDP information of the bootstrap DC in a case that the SDP information of the bootstrap DC is received; or
initiating, by the second terminal, a request to establish the bootstrap DC according to second information in a case that the second information is received, where the second information includes at least one of the following:
   a specific target address used by the first terminal to download the DC application;
   an address of a data channel signaling function DCSF corresponding to the DC application;
   an identifier allocated to the first terminal by the DCSF corresponding to the DC application; and
   a stream identifier used by the first terminal to establish the bootstrap DC.

In one implementation, if the information for downloading a DC application received by the second terminal is the SDP information of the bootstrap DC, the second terminal may send a provisional response message to establish the bootstrap DC.

In another implementation, if the information for downloading a DC application received by the second terminal includes the second information, the second terminal initiates a request for establishing the bootstrap DC according to the second information, where the destination address of the request for establishing the bootstrap DC is a specific target address used by the first terminal to download the DC application or an address of the data channel signaling function DCSF corresponding to the DC application. Alternatively, the second terminal determines the DC application to be downloaded according to at least one of the identifier allocated to the first terminal by the DCSF corresponding to the DC application and the stream identifier used by the first terminal to establish the bootstrap DC, and the DCSF storing the DC application establishes the bootstrap DC for the second terminal by using the request for establishing the bootstrap DC.

In this implementation, in a case that the first terminal has downloaded the DC application to be used with a communication peer, by sending the information for downloading a DC application, a bootstrap DC is established only for the second terminal, and a procedure of establishing a bootstrap DC for the first terminal is reduced.

As an optional implementation, the downloading, by the second terminal, the DC application based on the established bootstrap DC includes:
sending, by the second terminal, third information to the DCSF based on the established bootstrap DC, where the third information includes at least one of an identifier of a first terminal and a stream ID sent by the first terminal; and
receiving, by the second terminal, the DC application sent by the DCSF.

In some implementations, the third information may be carried in a request message used to establish the bootstrap DC, so that the DCSF receiving the request message used to establish the bootstrap DC establishes the bootstrap DC for the second terminal, and sends the DC application corresponding to the third information to the second terminal through the established bootstrap DC, that is, sends the DC application that has been downloaded by the first terminal and to be used with the communication peer to the second terminal.

Optionally, the method further includes:
sending, by the second terminal, SDP answer information, where the SDP answer information is carried in the 180 message or the 183 message.

In some implementations, the SDP answer information sent by the second terminal may include SDP answer information for the application DC, so that the first terminal completes the establishment procedure of the application DC according to the SDP answer information for the application DC.

In the embodiments of the present application, the second terminal executes a procedure corresponding to the first terminal. When receiving the third message, the second terminal may reply with the 180 message only when the third message is used to request establishment of the application DC, or after waiting to download the DC application, or after waiting to complete establishment of a bearer corresponding to the application DC. This can reduce the waiting duration from ringing to establishment of the bearer corresponding to the application DC caused by sending the ringing message when the application DC is not requested to be established, the DC application is not downloaded, or the bearer corresponding to the application DC is not established. In addition, the second terminal may establish the corresponding bootstrap DC based on the information for downloading a DC application by the first terminal, to download the same DC application as the first terminal based on the bootstrap DC.

Referring to FIG. 5, an embodiment of the present application provides a message processing method, where an execution body is an IMS AS. As shown in FIG. 5, the message processing method includes the following steps:
Step 501: The IMS AS receives a first message from a first terminal.
Step 502: The IMS AS executes a first operation according to the first message, where the first operation includes at least one of the following:
   sending second indication information to a data channel signaling function DCSF in a case that the first message is used to request establishment of a bootstrap data channel DC, where the second indication information is used to indicate to establish only the bootstrap DC;
   sending first SDP offer information to a second terminal in a case that the first message is used to request establishment of a bootstrap DC and an application DC, where the first SDP offer information is used to establish the bootstrap DC, and sending second SDP offer information to the second terminal in a case that the IMS AS receives first SDP answer information from the second terminal, where the first SDP answer information is SDP answer information corresponding to the first SDP offer information, and the second SDP offer information is used for establishing the application DC; and
   sending a fourth message to the DCSF in a case that the first message is used to request establishment of an application DC, where the fourth message is used to notify the DCSF to establish only the bootstrap DC for the second terminal (that is, not to establish the bootstrap DC for the first terminal).

In the embodiments of the present application, the first message, first SDP offer information, first SDP answer information, and second SDP offer information have the same meanings and functions as the first message, first SDP offer information, first SDP answer information, and second SDP offer information in the method embodiments executed by the first terminal and the second terminal in the foregoing embodiments of the present application, and details are not repeated herein.

In one implementation, in a case that the first message carries only the SDP offer information of the bootstrap DC and does not carry the SDP offer information of the application DC, the IMS AS may determine that the first message is used to request establishment of only the bootstrap DC, and not to establish the application DC, and accordingly send the second indication information to the DCSF.

In another implementation, in a case that the first message carries first indication information, the IMS AS may send the second indication information to the DCSF based on the first indication information. The first indication information is used to indicate to establish only the bootstrap DC, and not to establish the application DC.

Optionally, the second indication information is used to indicate at least one of the following:
establishing only the bootstrap DC, that is, not establishing the application DC;
establishing only the bootstrap DC for the first terminal, that is, not establishing the bootstrap DC for the second terminal, and not establishing the application DC; and
establishing a one-sided bootstrap DC, that is, not establishing the bootstrap DC for the peer (second terminal), and not establishing the application DC.

In some implementations, the second indication information includes at least one of the following:
carrying only SDP offer information corresponding to the bootstrap DC;
not carrying SDP offer information corresponding to the application DC; and
a specific target address.

In some implementations, the specific target address includes at least one of the following:
a customer service phone number of a communication operator;
a phone number of the first terminal itself;
a phone number of the DCSF;
a phone number of the IMS AS; and
a PSI used to indicate to establish only the bootstrap DC.

In some implementations, in a case that the first message is used to request establishment of a bootstrap DC and an application DC and the first SDP offer information is sent to the second terminal, the first SDP offer information is carried in a third message. The third message has the same meaning as the third message in the message processing method embodiment on the second terminal side, and details are not repeated herein.

In some implementations, after sending the first SDP offer information to the second terminal, if the IMS AS receives the first SDP answer information from the second terminal, it indicates that the SDP answer information used to establish the bootstrap DC is obtained. Thereafter, the second SDP offer information may be sent to the second terminal based on the SDP offer information for the application DC in the first message, to request establishment of the application DC.

Certainly, after sending the second SDP offer information to the second terminal, the IMS AS may receive second SDP answer information from the second terminal, that is, SDP answer information for the application DC. Thereafter, the first SDP answer information and the second SDP answer information may be sent to the first terminal, so that the first terminal to complete an establishment procedure of the bootstrap DC and the application DC.

In some implementations, in a case that the first terminal downloads a DC application by using the established bootstrap DC and requests exchange application data with the second terminal by using the DC application, the first terminal sends a first message to the second terminal to request establishment of an application DC used to transmit application data of the DC application. In this case, the second terminal may not have downloaded the DC application requested by the first terminal, or may not have established the bootstrap DC with the DCSF storing the DC application. In this case, the IMS sends a fourth message to the DCSF to notify the DCSF to establish only the bootstrap DC for the second terminal, and not to establish the bootstrap DC for the first terminal.

In other implementations, in a case that the first message is used for establishing the application DC, the sending the fourth message to the DCSF includes:
sending a fourth message to the DCSF in a case that the first message is a re-invite (re-Invite) message from the first terminal with a destination address being the second terminal, where the re-invite message carries second SDP offer information and information for downloading a DC application, and the second SDP offer information is used for establishing the application DC.

Optionally, the fourth message carries third indication information, where the third indication information is used to indicate to establish only the bootstrap DC for the second terminal, that is, indicating not to establish the bootstrap DC for the first terminal.

Certainly, the DCSF may, based on a record of establishing the bootstrap DC, when determining that the bootstrap DC has been established with the first terminal and the bootstrap DC is available, establish only the bootstrap DC for the second terminal based on the second SDP offer information, and not establish the bootstrap DC for the first terminal.

In this implementation, the first terminal downloads the DC application by using the established bootstrap DC, requests to exchange application data with the second terminal by using the DC application, and sends the information for downloading a DC application to the second terminal, so that the second terminal may establish the bootstrap DC corresponding to the first terminal based on the information for downloading a DC application, and download the same DC application as the first terminal. In this case, the second terminal may not have downloaded the DC application requested by the first terminal, or may not have established the bootstrap DC with the DCSF storing the DC application. Therefore, the IMS sends a fourth message to the DCSF to notify the DCSF to establish only the bootstrap DC for the second terminal, and not to establish the bootstrap DC for the first terminal. In this way, the second terminal may download the same DC application as the first terminal by using the established bootstrap DC.

It should be noted that in the embodiments of the present application, the steps in the message processing method executed by the IMS AS correspond to the steps in the method embodiments executed by the first terminal and the second terminal in the above embodiments of the present application. The message processing method executed by the IMS AS cooperates with the DC establishment method on the first terminal side and the message processing method on the second terminal side to jointly implement a DC establishment procedure, and can achieve beneficial effects corresponding to the DC establishment method on the first terminal side and the message processing method on the second terminal side. Details are not repeated herein.

As an optional implementation, in a case that the first message is used to request establishment of the bootstrap DC, the sending the second indication information to the DCSF includes:
sending the second indication information to the data channel signaling function DCSF in a case that the first message carries first indication information or the first message carries only SDP information corresponding to the bootstrap DC (that is, does not carry SDP of the application DC), where the first indication information is used to indicate to establish only the bootstrap DC, and not to establish the application DC.

Optionally, the second indication information is used to indicate at least one of the following:
establishing only the bootstrap DC;
establishing only the bootstrap DC for the first terminal; and
establishing a one-sided bootstrap DC.

Optionally, the second indication information includes at least one of the following:
carrying only SDP offer information corresponding to the bootstrap DC;
not carrying SDP offer information corresponding to the application DC; and
a specific target address.

Optionally, the specific target address includes at least one of the following:
a customer service phone number of a communication operator;
a phone number of the first terminal itself;
a phone number of the DCSF;
a phone number of the IMS AS; and
a PSI used to indicate to establish only the bootstrap DC.

The foregoing first indication information and second indication information have the same meanings and functions as the first indication information and second indication information in the method embodiments on the first terminal side and the second terminal side, and details are not repeated herein.

As an optional implementation, the method further includes:
sending, by the IMS AS, SDP answer information corresponding to the bootstrap DC to the first terminal in a case that the first message is used to request establishment of the bootstrap DC.

In some implementations, in a case that the first message is used to request establishment of the bootstrap DC, the bootstrap DC may be established only for the first terminal instead of for the second terminal, and the application DC is not established.

For example, assuming the first terminal is UE-1, as shown in FIG. 7a, in steps 5 to 8, the DCSF reserves only media information of MDC 1 for UE-1, and instructs the IMS AS to establish a connection with the MF for UE-1; and in a case that the IMS AS discovers an MF/enhance MRF, the IMS AS instructs the MF to reserve the media resource information for UE-1, and sends a response message to the DCSF to notify the DCSF whether the resource reservation is successful, and the data channel media resource information negotiated for MDC 1. After the DCSF sends a response message to the IMS AS, the IMS AS may send SDP answer information corresponding to the bootstrap DC to the first terminal by using a 200 OK message.

As an optional implementation, the method further includes:
sending, by the IMS AS, third SDP answer information to the first terminal in a case that the IMS AS receives second SDP answer information from the second terminal, where the third SDP answer information is SDP answer information corresponding to the bootstrap DC and the application DC.

In some implementations, the SDP answer information corresponding to the bootstrap DC may include resource information reserved by the MF for UE-1.

The foregoing second SDP answer information and third SDP answer information have the same meanings and functions as the second SDP answer information and third SDP answer information in the method embodiments on the first terminal side and the second terminal side, and details are not repeated herein.

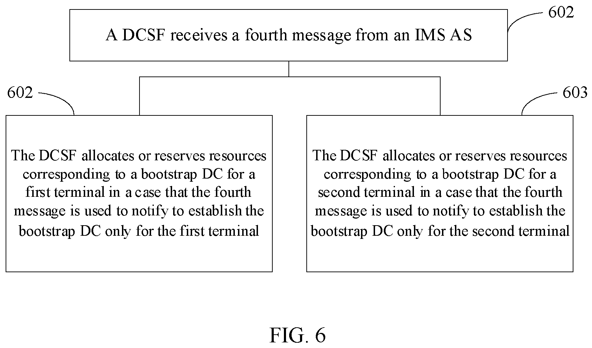

Referring to FIG. 6, an embodiment of the present application provides a resource allocation method, where an execution body is a DCSF. As shown in FIG. 6, the resource allocation method includes the following steps:
Step 601: The DCSF receives a fourth message from an IMS AS.
Step 602: The DCSF allocates or reserves resources corresponding to a bootstrap DC for a first terminal in a case that the fourth message is used to notify to establish only a bootstrap DC for the first terminal.
Step 603: The DCSF allocates or reserves resources corresponding to a bootstrap DC for a second terminal in a case that the fourth message is used to notify to establish only the bootstrap DC for the second terminal.

It should be noted that in the following implementations, the DCSF may execute only one of the foregoing steps 602 and 603. The method flowchart shown in FIG. 6 is merely an example, and the execution of step 602 or step 603 by the DCSF is not specifically limited herein.

In one implementation, in a case that the DCSF executes step 602, a one-sided bootstrap DC may be established for the first terminal.

For example, when a first condition is satisfied, the first terminal sends a first message to request establishment of the bootstrap DC for the first terminal, so that the first terminal may download a DC application list based on the bootstrap DC.

In another implementation, in a case that the DCSF executes step 603, a one-sided bootstrap DC may be established for the second terminal.

For example, in a case that the first terminal has downloaded the DC application to be used with the communication peer, when the first terminal sends a first message to request establishment of the application DC, if the second terminal has not downloaded the DC application or has not established the bootstrap DC with the DCSF storing the DC application, a network side establishes a bootstrap DC for the second terminal based on the first message. In this case, the DCSF allocates or reserves resources corresponding to only the bootstrap DC for the second terminal, and does not allocate or reserve resources corresponding to the bootstrap DC for the first terminal.

In the embodiments of the present application, the fourth message has the same meaning and function as the fourth message in the method embodiment executed by the IMS AS in the above embodiments of the present application, and details are not repeated herein.

In addition, in the embodiments of the present application, the steps in the resource allocation method executed by the DCSF correspond to the steps in the method embodiments executed by the first terminal, the second terminal, and the IMS AS in the above embodiments of the present application. The resource allocation method executed by the DCSF cooperates with the DC establishment method on the first terminal side, the message processing method on the second terminal side, and the message processing method on the IMS AS side to jointly implement a DC establishment procedure, and can achieve beneficial effects corresponding to the DC establishment method on the first terminal side, the message processing method on the second terminal side, and the message processing method on the IMS AS side. Details are not repeated herein.

As an optional implementation, in a case that the fourth message carries second indication information, the fourth message is used to notify to establish only the bootstrap DC for the first terminal, where the second indication information is used to indicate to establish only the bootstrap DC for the first terminal; or
in a case that the fourth message is triggered based on the first terminal initiating a first invite message to a specific target address, the fourth message is used to notify to establish only the bootstrap DC for the first terminal, and not for the second terminal, where the first invite message carries session description protocol SDP offer information used to establish the bootstrap DC.

The foregoing second indication information, specific target address, and first invite message have the same meanings and functions as the second indication information, specific target address, and first invite message in the aforementioned method embodiments on the first terminal side and the IMS AS side of the present application, and details are not repeated herein.

Optionally, the second indication information is used to indicate at least one of the following:
establishing only the bootstrap DC;
establishing only the bootstrap DC for the first terminal; and
establishing a one-sided bootstrap DC.

Optionally, the second indication information includes at least one of the following:
carrying only SDP offer information corresponding to the bootstrap DC;
not carrying SDP offer information corresponding to the application DC; and
a specific target address.

Optionally, the specific target address includes at least one of the following:
a customer service phone number of a communication operator;
a phone number of the first terminal itself;
a phone number of the DCSF;
a phone number of the IMS AS; and
a PSI used to indicate to establish only the bootstrap DC.

As an optional implementation, in a case that the fourth message carries third indication information, the fourth message is used to notify to establish only the bootstrap DC for the second terminal, and the third indication information is used to indicate to establish only the bootstrap DC for the second terminal, and not to establish the bootstrap DC for the first terminal.

The above third indication information has the same meaning and function as the third indication information in the aforementioned method embodiment on the IMS AS side of the present application, and details are not repeated herein.

As an optional implementation, the method further includes:
sending, by the DCSF, information for downloading a DC application to the first terminal in a case that the first terminal downloads a DC application based on the bootstrap DC.

Optionally, the information for downloading a DC application includes at least one of the following:
an address of the DCSF; and
an identifier allocated by the DCSF to the first terminal.

The above information for downloading a DC application has the same meaning and function as the information for downloading a DC application provided by the DCSF in the aforementioned method embodiment on the first terminal side of the present application, and details are not repeated herein.

To facilitate understanding of the DC establishment method, message processing method, and resource allocation method provided in the embodiments of the present application, with the first terminal as UE-1, the second terminal as UE-2, the DCSF used to establish the bootstrap DC as DCSF-1, and the DCSF used for establishing the application DC as DCSF-1 as an example, the interaction procedure between UE-1, UE-2, and network-side devices such as IMS AS, DCSF-1, and DCSF-1 is exemplified below:

### Embodiment 1

This embodiment describes a process in which UE-1 obtains a DC application list before a call. As shown in FIG. 7a, the process includes the following steps:
Step 0. UE-1 determines whether a first condition is satisfied.

The first condition includes at least one of the following:
UE-1 powers on or disables an airplane mode;
UE-1 completes IMS registration or IMS re-registration;
a dialer APP of UE-1 is started; and
a preset APP of UE-1 is started (for example, a preset APP dedicated to establishing DC, which may be independent of the dialer APP).

Subsequent steps are performed only when it is determined in step 0 that the first condition is satisfied.

Step 1. UE-1 sends an invite message (that is, the first invite message), where only SDP offer information corresponding to the bootstrap DC is carried in the SDP, and SDP offer information corresponding to the application DC is not carried.

The destination address of the above invite message is a specific target address, which may be a called number dedicated to establishing the bootstrap DC, such as a customer service phone of a communication operator or the communication number of UE-1 itself.

Step 2. Same as step 2 in FIG. 2A.

Optionally, the invite message carries indication information to establish only the bootstrap DC, that is, indication information not to establish the application DC.

Step 3. The IMS AS sends a Nimsas_SessionEventControl_Notify message to the DCSF.

Optionally, the Nimsas_SessionEventControl_Notify message carries second indication information, where the second indication information indicates at least one of the following:
indication information to establish only the bootstrap DC;
indication information to establish only the bootstrap DC for the calling UE; and
indication information to establish a one-sided bootstrap DC.

The IMS AS may determine by itself to include the second indication information based on that the invite message sent by UE-1 carries only the SDP of the bootstrap DC and does not carry the SDP of the application DC; or to include the second indication information based on that the invite message sent by UE-1 carries the indication information.

Step 4. The DCSF determines that the bootstrap DC needs to be established only for the calling UE, and the DCSF makes a judgment according to at least one of the following conditions:
(1) the called number is a special number; and
(2) the second indication information sent by the IMS AS.

Optionally, the called number includes at least one of the following:
a customer service phone number of a communication operator;
a phone number of the first terminal itself;
a phone number of the DCSF;
a phone number of the IMS AS; and
a PSI used to indicate to establish only the bootstrap DC.

Step 5. The DCSF reserves only media information of MDC 1 for UE-1, and does not reserve media information of MDC 1 for UE-2.

Step 6. The DCSF sends a Nimsas_MediaControl_MediaInstruction message to the IMS AS to instruct the IMS AS to establish a connection with an MF for UE-1.

Step 7. The IMS AS discovers an MF/enhance MRF.

Step 8. The IMS AS instructs the MF about the media resource information reserved for the calling party.

Steps 9 to 10. Same as steps 9 and 10 in FIG. 2A.

Step 11. The IMS AS sends a 200 OK to UE-1, carrying an SDP answer.

Step 12. UE-1 downloads a DC application list application list through the bootstrap DC.

Optionally, UE-1 downloads several applications with relatively high usage frequencies in the application list, such as screen sharing, file transfer, and positioning.

Optionally, UE-1 releases the established bootstrap DC.

For example, after establishing the bootstrap DC, UE-1 starts a timer (timer). If no request to use the bootstrap DC (for example, downloading a DC application) or to establish the application DC is received before the timer expires (expire), UE-1 releases (release) the bootstrap DC through a Bye message.

Through embodiment 1, UE-1 may obtain an available DC application list and present the list to the user on an interface of UE-1, to show which DC applications can be used to communicate with UE-2.

### Embodiment 2

In this embodiment, UE-1 obtains an application list before a call. Thereafter, UE-1 may select a DC application to be used by using the application list, and establishes a bootstrap DC first and then the application DC based on the selected DC application. As shown in FIG. 7b1 and FIG. 7b2, the process includes the following steps:

Step 1. When a user selects a DC application from the application list to establish an application DC with UE-2, UE-1 first initiates an establishment request for the bootstrap DC (namely, the second invite message).

Steps 2 to 15. Same as steps 2 to 15 in FIG. 2A. A difference is as follows: after receiving the bootstrap DC establishment request, UE-2 does not reply with a 180 ringing message and does not display an incoming call interface to the called user.

Step 16. Optionally, UE-1 downloads the application list.

It should be noted that step 16 is an optional step. In a case that UE-1 downloads the application list through the process shown in Embodiment 1 before the call, step 16 may not be executed.

Step 17. UE-1 downloads the DC application selected by the user.

Step 18. UE-1 establishes the application DC by using an update message, where the message includes the content of the bootstrap DC and the content of the application DC.

It should be noted that in step 13, if UE-2 replies with a 200 OK, then a re-invite message is sent in step 18, where the message includes the content of the bootstrap DC and the content of the application DC.

Steps 19 to 24. Same as steps 24 to 29 in FIG. 2B.

Step 25. UE-2 replies with a 183 message, carrying SDP answer corresponding to the application DC.

It should be noted that in addition to the 183 message in step 25, UE-2 may alternatively reply with a 180 message to carry the SDP answer of the application DC. In this case, step 25 includes the content of step 27 in FIG. 7b1 and FIG. 7b2, that is, UE-2 replies with a 180 message and plays an incoming call prompt tone to the user.

Step 26. Optionally, a called network side establishes a QoS flow corresponding to the application DC for UE-2.

It should be noted that in a case that UE-2 replies with a 180 message to carry the SDP answer of the application DC in step 25, the establishment of the QoS flow is executed after UE-2 replies with the 180 message.

In a case that UE-2 replies with a 183 message in step 25, step 27 is executed.

Step 27. UE-2 replies with a 180 message and plays an incoming call prompt tone to the user.

It should be noted that UE-2 may play the prompt tone in the following cases:
receiving the invite message of step 23;
downloading the DC application DC; and
completing establishment of the QoS flow corresponding to the application DC.

Step 28. When the called user agrees to use the DC application, UE-2 sends a 200 OK message.

Steps 29 to 31. Same as steps 31 to 33 in FIG. 2B. A difference is as follows: in this embodiment, the 200 OK message does not carry SDP answer information.

Steps 32 to 34. Same as steps 35 to 37 in FIG. 2B.

It should be noted that step 32 in this embodiment may alternatively be executed after receiving the SDP answer. For example, if the 183 message carries the SDP answer, step 32 is executed after step 25; or if the 180 message carries the SDP answer, step 32 is executed after step 27.

### Embodiment 3

In this embodiment, UE-1 obtains an application list and commonly used DC applications before a call. Thereafter, when the user selects a downloaded DC application, UE-1 may request to establish a bootstrap DC and an application DC simultaneously based on the selected DC application. As shown in FIG. 7c1 and FIG. 7c2, the process includes the following steps:
Step 0. UE-1 executes the process of Embodiment 1 and pre-downloads commonly used DC applications.
Step 1. A user of UE-1 selects to use the pre-downloaded DC application to communicate with UE-2. Then UE-1 sends an invite message (namely, the third invite message) with a destination address of UE-2, carrying SDP offer information of the bootstrap DC and the application DC in the SDP.
Steps 2 to 12. Same as steps 2 to 12 in FIG. 2A.
Step 13. UE-2 replies with an SDP answer by using a 183 response message.

The SDP answer in this step includes media information of a bootstrap DC determined by UE-2.

Step 14. The IMS AS sends SDP offer information of the bootstrap DC and the application DC to UE-2 by using an update message.

It should be noted that if UE-2 replies with a 200 OK message in step 13 as in FIG. 7c1 and FIG. 7c2, the IMS AS sends SDP offer information of the bootstrap DC and the application DC to UE-2 by using a re-invite message in step 18.

Step 15. UE-2 determines, based on the content of the application DC in the SDP offer, the DC application that UE-1 requests to use.

Optionally, when UE-2 determines that the DC application requested by UE-1 to be used has not been downloaded, the DC application is downloaded by using the bootstrap DC.

Step 16. UE-2 replies with SDP answer corresponding to the bootstrap DC and the application DC by using a 183 message.

It should be noted that in addition to the 183 message, UE-2 may also carry the SDP answer of the application DC through a 180 message. In this case, step 22 in FIG. 7c1 and FIG. 7c2 may be reduced, and the action of step 22 may be merged into step 25.

Step 17. The IMS sends SDP answer corresponding to the bootstrap DC and the application DC to UE-1.

The SDP answer for the bootstrap DC includes resources reserved by the MF for UE-1.

Steps 18 to 19. A network of UE-2 establishes a dedicated QoS flow for UE-2 for transmitting the bootstrap DC; and a network of UE-1 establishes a dedicated QoS flow for UE-1 for transmitting the bootstrap DC.

Step 20. Optionally, UE-1 downloads the DC application list application list through the bootstrap DC.

Step 21. Optionally, UE-1 updates the DC application selected by the user through the bootstrap DC.

Step 22. UE-2 replies with a 180 message and plays an incoming call prompt tone to the user.

It should be noted that UE-2 may play the prompt tone in the following cases:
receiving the invite message of step 12;
downloading the DC application DC; and
completing establishment of the QoS flow corresponding to the application DC.

Steps 23 to 26. Same as steps 30 to 33 in FIG. 2B. A difference is as follows: in this embodiment, the 200 OK message does not carry SDP answer information.

Steps 27 to 28. Same as steps 36 and 37 in FIG. 2B.

### Embodiment 4

In this embodiment, UE-1 downloads an application list and commonly used DC applications from DCSF-1 before a call. Thereafter, when a user selects the downloaded DC application, UE-1 may request to establish an application DC based on the selected DC application, and send information for downloading the selected DC application to UE-2, so that UE-2 establishes the bootstrap DC with DCSF-1 storing the DC application based on the information for downloading the selected DC application. As shown in FIG. 7d1 and FIG. 7d2, the process includes the following steps:
Step 1. UE-1 executes the process of Embodiment 1 and pre-downloads commonly used DC applications.

Optionally, DCSF-1 sends information for downloading the DC application to UE-1, including at least one of the following:
an address of DCSF-1; and
an identifier allocated by DCSF-1 to UE-1.

Step 2. Optionally, UE-1 downloads the DC application according to the user selection.

For example, when the selected DC application has an update, the updated DC application is downloaded.

Step 3. UE-1 uses the DC application selected by the user to communicate with UE-2.

In step 3, UE-1 sends an invite message (namely, the fourth invite message) with a destination address of UE-2. The SDP of the invite message carries SDP offer information of the application DC and information for downloading a DC application.

The information for downloading a DC application includes at least one of the following:
SDP information of the bootstrap DC;
a specific target address used by a first terminal to download the DC application;
an address of a data channel signaling function DCSF corresponding to the DC application;
an identifier allocated to the first terminal by the DCSF corresponding to the DC application; and
a stream identifier used by the first terminal to establish the bootstrap DC.

Steps 4 to 9. Same as steps 24 to 28 in FIG. 2B. A difference is as follows: in this embodiment, the re-invite message in FIG. 2A and FIG. 2B is replaced with an invite message, and information for downloading a DC application is additionally carried in the invite message.

It should be noted that the DCSF-1 used by UE-1 to download the DC application and the DCSF-2 used by UE-2 to establish the application DC may be the same or different, which is not specifically limited herein.

Step 10. UE-2 initiates the establishment process of the bootstrap DC according to the DC application download information. For the specific process, reference may be made to the process of initiating the establishment of the bootstrap DC in Embodiment 1, and details are not repeated herein.

Optionally, UE-2 may carry the identifier of UE-1 and the stream ID sent by UE-1 in the establishment of the bootstrap DC.

Step 11. Optionally, if UE-2 has not downloaded the DC application selected by UE-1, the DC application is downloaded through the established bootstrap DC.

Steps 12 to 20. Same as steps 16 to 28 in FIG. 2A and FIG. 2B. A difference is as follows: in this embodiment, the SDP answer replied by UE-2 includes only the SDP answer corresponding to the application DC, and does not include the SDP answer corresponding to the bootstrap DC.

### Embodiment 5

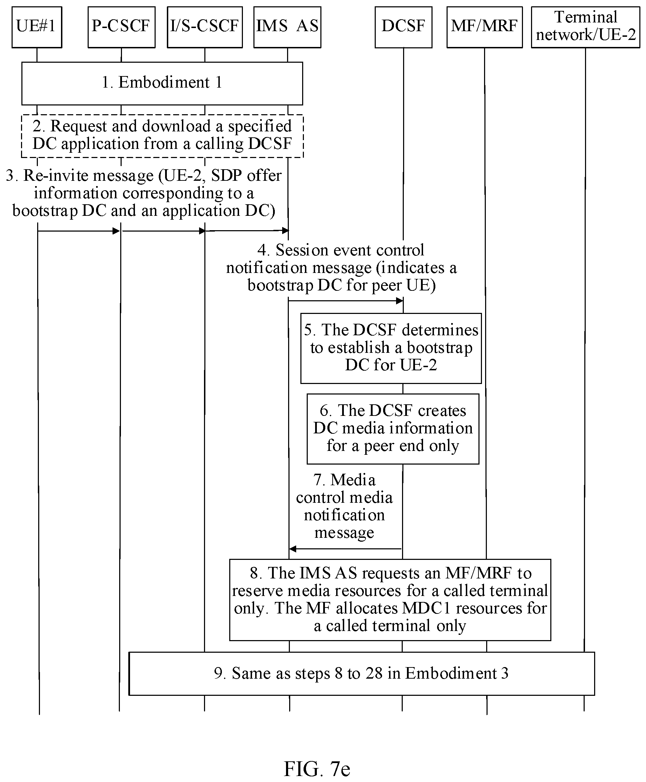

In this embodiment, UE-1 downloads an application list and commonly used DC applications from DCSF-1 before a call. Thereafter, in a case that the bootstrap DC remains available upon receipt of a request for establishing an application DC, UE-1 may request to establish an application DC based on the selected DC application, and establish the bootstrap DC corresponding to the information of the DC application for UE-2. As shown in FIG. 7e, the process includes the following steps:
Step 1. UE-1 executes the process of Embodiment 1 and pre-downloads commonly used DC applications.
Step 2. Same as step 2 in Embodiment 4.
Step 3. UE-1 uses the DC application selected by the user to communicate with UE-2.
   In this step, UE-1 sends a re-invite message with a destination address of UE-2. The SDP of the re-invite message carries SDP offer information of the bootstrap DC and the application DC.
Step 4. The IMS AS sends a notification message (namely, the fourth message) to the DCSF.
   Optionally, the above notification message may include indication information for establishing the bootstrap DC for the peer UE.
Step 5. The DCSF determines to establish the bootstrap DC for UE-2 according to the notification message.
Step 6. The DCSF creates DC media information only for UE-2, and does not create DC media information for UE-1.
   In this step, the DCSF may execute the step of creating DC media information only for UE-2 according to the indication information in step 4 of this embodiment; alternatively, the DCSF may execute the step of only creating DC media information for UE-2 according to its own judgment. For example, the DCSF records that media information has been allocated only for the calling UE, and when receiving a request to establish the bootstrap DC again, creates DC media information only for the peer UE.
Step 7. Same as step 6 in FIG. 2A.
Step 8. The IMS AS requests the MF/MRF to allocate media resources for the peer UE, and the MF only allocates MDC 1 media resources for the peer UE, and does not allocate MDC 1 media resources for UE-1.
Step 9. Same as steps 8 to 28 in Embodiment 3.

An execution body of the DC establishment method provided in the embodiments of the present application may be a DC establishment apparatus. In the embodiments of the present application, the DC establishment apparatus is taken as an example to execute the DC establishment method, to illustrate the DC establishment apparatus provided in the embodiments of the present application.

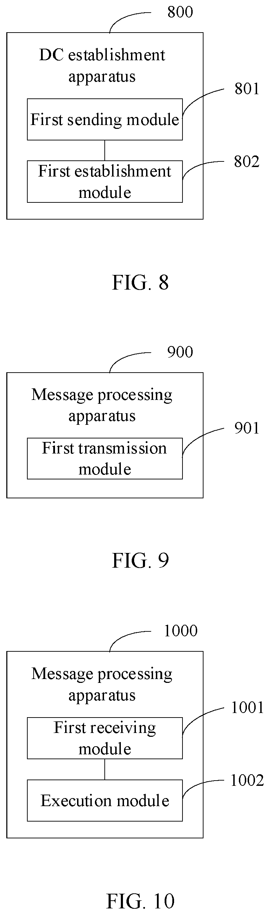

As shown in FIG. 8, the DC establishment apparatus according to the embodiments of the present application may be an apparatus corresponding to a first terminal. As shown in FIG. 8, the DC establishment apparatus 800 includes the following modules:
a first sending module 801, configured to send a first message without establishing a voice, video, or messaging media, where the first message is used to request establishment of a target DC, and the target DC includes at least one of a bootstrap DC and an application DC; and
a first establishment module 802, configured to receive a first response message, and establish the target DC according to the first response message.

Optionally, the first sending module 801 is specifically configured to:
send a first invite message to a specific target address, where the first invite message carries session description protocol SDP offer information used to establish the bootstrap DC.

Optionally, the first invite message further carries first indication information, where the first indication information is used to indicate to establish only the bootstrap DC.

Optionally, the first sending module 801 is specifically configured to:
send the first message in a case that a first condition is satisfied; where
the first condition includes at least one of the following:
   the first terminal is powered on;
   the first terminal disables or turns off airplane mode;
   the first terminal completes IMS registration or IMS re-registration;
   a dialer application APP of the first terminal is started; and
   a preset APP of the first terminal is started, where the preset APP is used to establish the target DC.

Optionally, the DC establishment apparatus 800 further includes:
a first download module, configured to download an application list based on the bootstrap DC.

Optionally, the DC establishment apparatus 800 further includes:
a second download module, configured to download a first DC application from the application list based on the bootstrap DC.

Optionally, the DC establishment apparatus 800 further includes:
a release module, configured to release the bootstrap DC.

Optionally, the release module is specifically configured to:
release the bootstrap DC in a case that a second condition is satisfied, where the second condition includes at least one of the following:
the first terminal does not use the bootstrap DC to send message or data upon expiry of a first timer; and
the first terminal does not initiate a request message for establishing an application DC upon expiry of the first timer; where
the first timer is started when the first terminal successfully establishes the bootstrap DC, or started after the first terminal downloads the application list, or started after downloading a first DC application.

Optionally, the target DC includes a bootstrap DC and an application DC, and the first sending module 801 includes:
a first sending unit, configured to send a second invite message to a second terminal, where the second invite message carries first SDP offer information, and the first SDP offer information is used to establish the bootstrap DC; and
a first transmission unit, configured to send a second message to the second terminal in a case that first SDP answer information is received, where the second message carries second SDP offer information, the first SDP answer information is SDP answer information corresponding to the first SDP offer information, and the second SDP offer information is used for establishing the application DC.

Optionally, the first transmission unit is specifically configured to:
send an update message in a case that the first terminal receives a 183 response message carrying the first SDP answer information; or
send a re-invite message in a case that the first terminal receives a 200 OK message carrying the first SDP answer information.

Optionally, the target DC includes a bootstrap DC and an application DC, and the first sending module 801 is specifically configured to:
send a third invite message to a second terminal, where the third invite message carries third SDP offer information, and the third SDP offer information is used to establish the bootstrap DC and the application DC.

Optionally, the DC establishment apparatus 800 further includes:
an initiation module, configured to initiate a procedure of downloading a DC application in a case that a second response message carrying third SDP answer information is received, where the third SDP answer information is SDP answer information corresponding to the third SDP offer information.

Optionally, the second response message includes at least one of the following:
183 message;
180 message; and
200 OK message.

Optionally, the target DC includes an application DC, and the first sending module 801 is specifically configured to:
send a fourth invite message to a second terminal, where the fourth invite message carries fourth SDP offer information and information for downloading a DC application, the fourth SDP offer information is used for establishing the application DC, and the first terminal has downloaded the DC application using a bootstrap DC.

Optionally, the information for downloading a DC application includes at least one of the following:
SDP information of the bootstrap DC;
a specific target address used by the first terminal to download the DC application;
an address of a data channel signaling function DCSF corresponding to the DC application;
an identifier allocated to the first terminal by the DCSF corresponding to the DC application; and
a stream identifier used by the first terminal to establish the bootstrap DC.

Optionally, the DC establishment apparatus 800 further includes:
a third receiving module, configured to receive first information from a first DCSF, where the first DCSF is used to establish the bootstrap DC for the first terminal, and the first information includes at least one of the following:
an address of the first DCSF; and
an identifier allocated to the first terminal by the first DCSF.

Optionally, the target DC includes an application DC, and the first sending module 801 is specifically configured to:
send a re-invite message to a second terminal, where the re-invite message carries fifth SDP offer information, and the fifth SDP offer information is used for establishing the application DC.

The message processing method provided in the embodiments of the present application may have an execution body of a message processing apparatus. In the embodiments of the present application, the message processing apparatus is taken as an example to execute the message processing method, to illustrate the message processing apparatus provided in the embodiments of the present application.

As shown in FIG. 9, a message processing apparatus according to an embodiment of the present application may be an apparatus corresponding to a second terminal. As shown in FIG. 9, the message processing apparatus 900 includes the following modules:
a first transmission module 901, configured to send a 180 message corresponding to the third message in a case that a third message is received and a third condition is satisfied, where the third message is used to request establishment of a target data channel DC, and the target DC includes at least one of a bootstrap DC and an application DC; where
the third condition includes at least one of the following:
   the third message is used to request establishment of an application DC;
   the second terminal successfully downloads a DC application corresponding to the application DC; and
   the second terminal successfully establishes a bearer corresponding to the application DC.

Optionally, in a case that the third message carries information for downloading a DC application, the message processing apparatus 900 further includes:
an establishment module, configured to establish a bootstrap DC according to the information for downloading a DC application; and
a third download module, configured to download the DC application based on the established bootstrap DC.

Optionally, the information for downloading a DC application includes at least one of the following:
SDP information of the bootstrap DC;
a specific target address used by a first terminal to download the DC application;
an address of a data channel signaling function DCSF corresponding to the DC application;
an identifier allocated to the first terminal by the DCSF corresponding to the DC application; and
a stream identifier used by the first terminal to establish the bootstrap DC.

Optionally, the establishment module is specifically configured to:
send a provisional response message and establish the bootstrap DC according to the SDP information of the bootstrap DC in a case that the second terminal receives the SDP information of the bootstrap DC; or
initiate a request to establish the bootstrap DC according to second information in a case that the second terminal receives the second information, where the second information includes at least one of the following:
   a specific target address used by the first terminal to download the DC application;
   an address of a data channel signaling function DCSF corresponding to the DC application;
   an identifier allocated to the first terminal by the DCSF corresponding to the DC application; and
   a stream identifier used by the first terminal to establish the bootstrap DC.

Optionally, the third download module includes:
a second sending unit, configured to send third information to the DCSF based on the established bootstrap DC, where the third information includes at least one of an identifier of a first terminal and a stream ID sent by the first terminal; and
a first receiving unit, configured to receive the DC application sent by the DCSF.

Optionally, the third message includes at least one of the following:
invite message, re-invite message, and update message.

Optionally, the message processing apparatus 900 further includes:
an output module, configured to output an incoming call prompt message.

Optionally, the message processing apparatus 900 further includes:
a second sending module, configured to send SDP answer information, where the SDP answer information is carried in the 180 message or the 183 message.

As shown in FIG. 10, another message processing apparatus according to an embodiment of the present application may be an apparatus corresponding to an IMS AS. As shown in FIG. 10, the message processing apparatus 1000 includes the following modules:
a first receiving module 1001, configured to receive a first message from a first terminal; and
an execution module 1002, configured to execute a first operation according to the first message, where the first operation includes at least one of the following:
   sending second indication information to a data channel signaling function DCSF in a case that the first message is used to request establishment of a bootstrap data channel DC, where the second indication information is used to indicate to establish only the bootstrap DC;
   sending first SDP offer information to a second terminal in a case that the first message is used to request establishment of a bootstrap DC and an application DC, where the first SDP offer information is used to establish the bootstrap DC, and sending second SDP offer information to the second terminal in a case that the IMS AS receives first SDP answer information from the second terminal, where the first SDP answer information is SDP answer information corresponding to the first SDP offer information, and the second SDP offer information is used for establishing the application DC; and
   sending a fourth message to the DCSF in a case that the first message is used to request establishment of an application DC, where the fourth message is used to notify the DCSF to establish only a bootstrap DC for the second terminal.

Optionally, the execution module 1002 includes:
a third sending unit, configured to send a fourth message to the DCSF in a case that the first message is a re-invite message from the first terminal with a destination address being the second terminal, where the re-invite message carries second SDP offer information and information for downloading a DC application, and the second SDP offer information is used for establishing the application DC.

Optionally, the fourth message carries third indication information, where the third indication information is used to indicate to establish only the bootstrap DC for the second terminal.

Optionally, the execution module 1002 includes:
a fourth sending unit, configured to send second indication information to the data channel signaling function DCSF in a case that the first message carries first indication information or the first message carries only SDP information corresponding to the bootstrap DC, where the first indication information is used to indicate to establish only the bootstrap DC.

Optionally, the second indication information is used to indicate at least one of the following:
establishing only the bootstrap DC;
establishing only the bootstrap DC for the first terminal; and
establishing a one-sided bootstrap DC.

Optionally, the message processing apparatus 1000 further includes:
a third sending module, configured to send SDP answer information corresponding to the bootstrap DC to the first terminal in a case that the first message is used to request establishment of the bootstrap DC.

Optionally, the message processing apparatus 1000 further includes:
a fourth sending module, configured to send third SDP answer information to the first terminal in a case that the IMS AS receives second SDP answer information from the second terminal, where the third SDP answer information is SDP answer information corresponding to the bootstrap DC and the application DC.

The resource allocation method provided in the embodiments of the present application may have an execution body of a resource allocation apparatus. In the embodiments of the present application, the resource allocation apparatus is taken as an example to execute the resource allocation method, to illustrate the resource allocation apparatus provided in the embodiments of the present application.

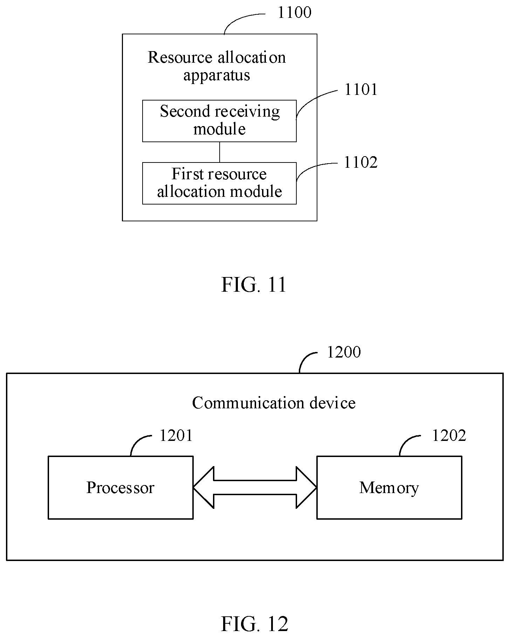

As shown in FIG. 11, the resource allocation apparatus according to an embodiment of the present application can be an apparatus corresponding to a DCSF. As shown in FIG. 11, the resource allocation apparatus 1100 includes the following modules:
a second receiving module 1101, configured to receive a fourth message from an IP multimedia subsystem application server IMS AS;
a first resource allocation module 1102, configured to allocate or reserve resources corresponding to the bootstrap DC for a first terminal by the DCSF in a case that the fourth message is used to notify to establish only a bootstrap data channel DC for the first terminal; or
a second resource allocation module, configured to allocate or reserve resources corresponding to the bootstrap DC for a second terminal by the DCSF in a case that the fourth message is used to notify to establish only a bootstrap DC for the second terminal.

Optionally, in a case that the fourth message carries second indication information, the fourth message is used to notify to establish only the bootstrap DC for the first terminal, where the second indication information is used to indicate to establish only the bootstrap DC for the first terminal; or
in a case that the fourth message is triggered based on the first terminal initiating a first invite message to a specific target address, the fourth message is used to notify to establish only the bootstrap DC for the first terminal, where the first invite message carries session description protocol SDP offer information used to establish the bootstrap DC.

Optionally, the second indication information is used to indicate at least one of the following:
establishing only the bootstrap DC;
establishing only the bootstrap DC for the first terminal; and
establishing a one-sided bootstrap DC.

Optionally, in a case that the fourth message carries third indication information, the fourth message is used to notify to establish only the bootstrap DC for the second terminal, and the third indication information is used to indicate to establish only the bootstrap DC for the second terminal.

Optionally, the resource allocation apparatus 1100 further includes:
a fifth sending module, configured to send information for downloading a DC application to the first terminal in a case that the first terminal downloads a DC application based on the bootstrap DC.

Optionally, the information for downloading a DC application includes at least one of the following:
an address of the DCSF; and
an identifier allocated by the DCSF to the first terminal.

The DC establishment apparatus, message processing apparatus, and resource allocation apparatus in the embodiments of the present application may be electronic devices, for example, electronic devices with an operating system, or may be components in an electronic device, for example, integrated circuits or chips. The electronic device may be a terminal, or may be a network-side device. For example, the terminal may include but is not limited to the types of the terminal 11 listed above, the network-side device may include but is not limited to the types of the network-side device 12 listed above, which are not specifically limited in the embodiments of the present application.

The DC establishment apparatus, message processing apparatus, and resource allocation apparatus provided in the embodiments of the present application can implement the various processes implemented by the DC establishment method, message processing method, and resource allocation method embodiments described above, with the same technical effects achieved. To avoid repetition, details are not repeated herein.

As shown in FIG. 12, an embodiment of the present application further provides a communication device 1200, including a processor 1201 and a memory 1202, where the memory 1202 stores a program or instructions capable of running on the processor 1201. For example, when the communication device 1200 is a terminal, the program or instructions are executed by the processor 1201 to implement the steps of the DC establishment method, message processing method, and resource allocation method embodiments described above, with the same technical effects achieved. When the communication device 1200 is a network-side device, the program or instructions are executed by the processor 1201 to implement the steps of the DC establishment method, message processing method, and resource allocation method embodiments of the present application described above, with the same technical effects achieved. To avoid repetition, details are not described herein again.

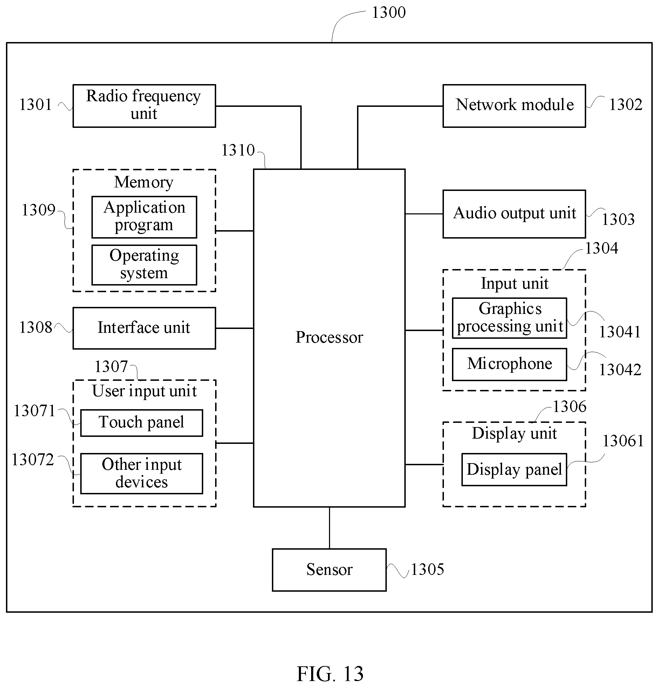

An embodiment of the present application further provides a terminal including a processor and a communication interface, where the communication interface is coupled to the processor, and the processor is configured to run a program or instructions so as to implement the steps of the DC establishment method or the message processing method embodiment on the second terminal side. This terminal embodiment corresponds to the foregoing method embodiment on the terminal side. All implementations in the foregoing method embodiment may be applicable to this terminal embodiment, with the same technical effects achieved. Specifically, FIG. 13 is a schematic structural diagram of hardware of a terminal for implementing embodiments of the present application.

The terminal 1300 includes, but is not limited to, at least some of components such as a radio frequency unit 1301, a network module 1302, an audio output unit 1303, an input unit 1304, a sensor 1305, a display unit 1306, a user input unit 1307, an interface unit 1308, a memory 1309, and a processor 1310.

Persons skilled in the art can understand that the terminal 1300 may further include a power supply (for example, a battery) for supplying power to the components. The power supply may be logically connected to the processor 1310 through a power management system. In this way, functions such as charge management, discharge management, and power consumption management are implemented by using the power management system. The structure of the terminal shown in FIG. 13 does not constitute any limitation on the terminal. The terminal may include more or fewer components than shown in the figure, or a combination of some components, or the components disposed differently. Details are not described herein again.

It should be understood that in this embodiment of the present application, the input unit 1304 may include a graphics processing unit (Graphics Processing Unit, GPU) 13041 and a microphone 13042. The graphics processing unit 13041 processes image data of a static picture or a video that is obtained by an image capture apparatus (for example, a camera) in a video capture mode or an image capture mode. The display unit 1306 may include a display panel 13061, and the display panel 13061 may be configured in a form of a liquid crystal display, an organic light-emitting diode, and the like. The user input unit 1307 includes at least one of a touch panel 13071 and other input devices 13072. The touch panel 13071 is also referred to as a touchscreen. The touch panel 13071 may include two parts: a touch detection apparatus and a touch controller. The other input devices 13072 may include but are not limited to a physical keyboard, a function key (for example, a volume control key or a power on/off key), a trackball, a mouse, a joystick, and the like. Details are not described herein again.

In this embodiment, after receiving downlink data from a network-side device, the radio frequency unit 1301 may transmit the downlink data to the processor 1310 for processing. In addition, the radio frequency unit 1301 may transmit uplink data to the network-side device. Generally, the radio frequency unit 1301 includes but is not limited to an antenna, an amplifier, a transceiver, a coupler, a low noise amplifier, and a duplexer.

The memory 1309 may be configured to store software programs or instructions and various data. The memory 1309 may include first storage area for storing programs or instructions and a second storage area for storing data. The first storage area may store an operating system, an application program or instruction required by at least one function (for example, a sound playback function or an image playback function), and the like. In addition, the memory 1309 may include either a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1309 in this embodiment of the present application includes but is not limited to these and any other suitable types of memories.

The processor 1310 may include one or more processing units. Optionally, an application processor and a modem processor are integrated in the processor 1310. The application processor primarily processes operations relating to an operating system, user interfaces, application programs, and the like. The modem processor primarily processes radio communication signals, for example, being a baseband processor. It can be understood that the modem processor may alternatively be not integrated in the processor 1310.

In some implementations, the terminal 1300 is a first terminal.

In this implementation, the radio frequency unit 1301 is configured to send a first message without establishing a voice, video, or messaging media, where the first message is used to request establishment of a target DC, and the target DC includes at least one of a bootstrap DC and an application DC; and
the radio frequency unit 1301 is further configured to receive a first response message, and establish the target DC according to the first response message.

Optionally, the target DC includes a bootstrap DC, and the sending a first message executed by the radio frequency unit 1301 includes:
sending a first invite message to a specific target address, where the first invite message carries session description protocol SDP offer information used to establish the bootstrap DC.

Optionally, the first invite message further carries first indication information, and the first indication information is used to indicate to establish only the bootstrap DC.

Optionally, the sending a first message executed by the radio frequency unit 1301 includes:
sending the first message in a case that the first terminal satisfies a first condition; where
the first condition includes at least one of the following:
   the first terminal is powered on;
   the first terminal disables or turns off airplane mode;
   the first terminal completes IMS registration or IMS re-registration;
   a dialer application APP of the first terminal is started; and
   a preset APP of the first terminal is started, where the preset APP is used to establish the target DC.

Optionally, the processor 1310 is configured to control the radio frequency unit 1301 to download an application list based on the bootstrap DC.

Optionally, the processor 1310 is further configured to control the radio frequency unit 1301 to download a first DC application from the application list based on the bootstrap DC.

Optionally, the processor 1310 is further configured to control the radio frequency unit 1301 to release the bootstrap DC.

Optionally, the controlling the radio frequency unit 1301 to release the bootstrap DC executed by the processor 1310 includes:
controlling the radio frequency unit 1301 to release the bootstrap DC in a case that it is determined that the first terminal satisfies a second condition, where the second condition includes at least one of the following:
the first terminal does not use the bootstrap DC to send message or data upon expiry of a first timer; and
the first terminal does not initiate a request message for establishing an application DC upon expiry of the first timer; where
the first timer is started when the first terminal successfully establishes the bootstrap DC, or started after the first terminal downloads the application list, or started after downloading a first DC application.

Optionally, the target DC includes a bootstrap DC and an application DC, and the sending a first message executed by the radio frequency unit 1301 includes:
sending a second invite message to a second terminal, where the second invite message carries first SDP offer information, and the first SDP offer information is used to establish the bootstrap DC; and
sending a second message to the second terminal in a case that first SDP answer information is received, where the second message carries second SDP offer information, the first SDP answer information is SDP answer information corresponding to the first SDP offer information, and the second SDP offer information is used for establishing the application DC.

Optionally, the sending the second message to the second terminal in a case that the first SDP answer information is received executed by the radio frequency unit 1301 includes:
sending an update message in a case that a 183 response message carrying the first SDP answer information is received; or
sending a re-invite message in a case that a 200 OK message carrying the first SDP answer information is received.

Optionally, the target DC includes a bootstrap DC and an application DC, and the sending a first message executed by the radio frequency unit 1301 includes:
sending a third invite message to a second terminal, where the third invite message carries third SDP offer information, and the third SDP offer information is used to establish the bootstrap DC and the application DC.

Optionally, the processor 1310 is further configured to initiate a procedure of downloading a DC application in a case that the radio frequency unit 1301 receives a second response message carrying third SDP answer information, where the third SDP answer information is SDP answer information corresponding to the third SDP offer information.

Optionally, the second response message includes at least one of the following:
183 message;
180 message; and
200 OK message.

Optionally, the target DC includes an application DC, and the sending a first message executed by the radio frequency unit 1301 includes:
sending a fourth invite message to a second terminal, where the fourth invite message carries fourth SDP offer information and information for downloading a DC application, the fourth SDP offer information is used for establishing the application DC, and the first terminal has downloaded the DC application using a bootstrap DC.

Optionally, the information for downloading a DC application includes at least one of the following:
SDP information of the bootstrap DC;
a specific target address used by a first terminal to download the DC application;
an address of a data channel signaling function DCSF corresponding to the DC application;
an identifier allocated to the first terminal by the DCSF corresponding to the DC application; and
a stream identifier used by the first terminal to establish the bootstrap DC.

Optionally, the radio frequency unit 1301 is further configured to receive first information from a first DCSF, where the first DCSF is used to establish the bootstrap DC for the first terminal, and the first information includes at least one of the following:
an address of the first DCSF; and
an identifier allocated to the first terminal by the first DCSF.

Optionally, the target DC includes an application DC, and the sending a first message executed by the radio frequency unit 1301 includes:
sending a re-invite message to a second terminal, where the re-invite message carries fifth SDP offer information, and the fifth SDP offer information is used for establishing the application DC.

In other implementations, the terminal 1300 is a second terminal.

In this implementation, the processor 1310 is configured to control the radio frequency unit 1301 to send a 180 message corresponding to the third message in a case that the radio frequency unit 1301 receives a third message and a third condition is satisfied, where the third message is used to request establishment of a target data channel DC, and the target DC includes at least one of a bootstrap DC and an application DC; where
the third condition includes at least one of the following:
the third message is used to request establishment of an application DC;
the second terminal successfully downloads a DC application corresponding to the application DC; and
the second terminal completes establishment of a bearer corresponding to the application DC.

Optionally, in a case that the third message carries information for downloading a DC application, the processor 1310 is further configured to:
establish a bootstrap DC according to the information for downloading a DC application; and
control the radio frequency unit 1301 to download the DC application based on the established bootstrap DC.

Optionally, the information for downloading a DC application includes at least one of the following:
SDP information of the bootstrap DC;
a specific target address used by a first terminal to download the DC application;
an address of a data channel signaling function DCSF corresponding to the DC application;
an identifier allocated to the first terminal by the DCSF corresponding to the DC application; and
a stream identifier used by the first terminal to establish the bootstrap DC.

Optionally, the establishing the bootstrap DC according to the information for downloading a DC application executed by the processor 1310 includes:
controlling the radio frequency unit 1301 to send a provisional response message and establish the bootstrap DC according to the SDP information of the bootstrap DC in a case that the SDP information of the bootstrap DC is received through the radio frequency unit 1301; or
controlling the radio frequency unit 1301 to initiate a request to establish the bootstrap DC according to second information in a case that the radio frequency unit 1301 receives the second information, where the second information includes at least one of the following:
   a specific target address used by the first terminal to download the DC application;
   an address of a data channel signaling function DCSF corresponding to the DC application;
   an identifier allocated to the first terminal by the DCSF corresponding to the DC application; and
   a stream identifier used by the first terminal to establish the bootstrap DC.

Optionally, the controlling the radio frequency unit 1301 to download the DC application based on the established bootstrap DC executed by the processor 1310 includes:
controlling the radio frequency unit 1301 to send third information to the DCSF based on the established bootstrap DC, the third information including at least one of an identifier of a first terminal and a stream ID sent by the first terminal; and
receiving the DC application sent by the DCSF through the radio frequency unit 1301.

Optionally, the third message includes at least one of the following:
invite message, re-invite message, and update message.

Optionally, the processor 1310 is further configured to control at least one of the display unit 1306 and the audio output unit 1303 to output an incoming call prompt message.

Optionally, the radio frequency unit 1301 is further configured to send SDP answer information, where the SDP answer information is carried in the 180 message or the 183 message.

It can be understood that the implementation processes of the various implementations mentioned in this embodiment may refer to the relevant descriptions of the DC establishment method and the message processing method embodiment on the second terminal side, and can achieve the same or corresponding technical effects as the DC establishment method and the message processing method embodiment on the second terminal side. To avoid repetition, details are not repeated herein.

An embodiment of the present application further provides a network-side device, including a processor and a communication interface, where the communication interface is coupled to the processor, and the processor is configured to run a program or instructions to implement the steps of the message processing method and the resource allocation method embodiments on the IMS AS side. The network-side device embodiment corresponds to the foregoing network-side device method embodiment. All implementations in the foregoing method embodiment may be applicable to the network-side device embodiment, with the same technical effect achieved. Specifically, an embodiment of the present application provides a network-side device.

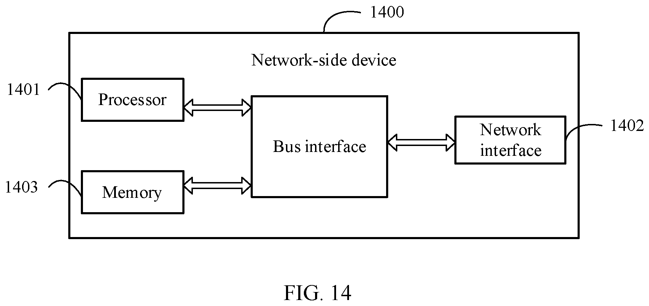

As shown in FIG. 14, the network-side device 1400 includes a processor 1401, a network interface 1402, a memory 1403. The network interface 1402 may be, for example, a common public radio interface (Common Public Radio Interface, CPRI).

Specifically, the network-side device 1400 in this embodiment of the present application further includes: instructions or a program stored in the memory 1403 and capable of running on the processor 1401. The processor 1401 invokes the instructions or program in the memory 1403 to execute the method executed by the modules shown in FIG. 10 or FIG. 11, with the same technical effects achieved. To avoid repetition, details are not described herein again.

An embodiment of the present application further provides a readable storage medium, where the readable storage medium stores a program or instructions, and when the program or instructions are executed by a processor, the processes of the foregoing DC establishment method, message processing method, and resource allocation method embodiments can be implemented, with same technical effects achieved. To avoid repetition, details are not described herein again.

The processor is a processor in the terminal described in the foregoing embodiment. The readable storage medium includes a computer-readable storage medium such as a computer read-only memory ROM, a random access memory RAM, a magnetic disk, or an optical disc. In some examples, the readable storage medium may be a non-transitory readable storage medium.

An embodiment of the present application further provides a chip, where the chip includes a processor and a communication interface, where the communication interface is coupled to the processor, and the processor is configured to run a program or instructions to implement the processes of the foregoing DC establishment method, message processing method, and resource allocation method embodiments, with the same technical effects achieved. To avoid repetition, details are not described herein again.

It should be understood that the chip mentioned in this embodiment of the present application may also be referred to as a system-on-chip, a system chip, a system-on-a-chip, or a system on a chip, or the like.

An embodiment of the present application further provides a computer program/program product, where the computer program/program product is stored in a storage medium, and the computer program/program product is executed by at least one processor to implement the processes of the foregoing DC establishment method, message processing method, and resource allocation method embodiments, with the same technical effects achieved. To avoid repetition, details are not repeated herein.

An embodiment of the present application further provides a wireless communication system, including a terminal and a network-side device, where the terminal may be configured to execute the steps of the foregoing DC establishment method or the message processing method on the second terminal side, and the network-side device may be configured to execute the steps of the message processing method on the IMS AS side and the resource allocation method.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of the present application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiment may be implemented by a computer software product with a necessary general hardware platform. Certainly, the method in the foregoing embodiment may also be implemented by hardware. This computer software product is stored in a storage medium (such as ROM, RAM, magnetic disk, or optical disk) and includes a number of instructions to enable the terminal or the network-side device to execute the methods described in the various embodiments of the present application.

The foregoing describes the embodiments of the present application with reference to the accompanying drawings. However, the present application is not limited to the foregoing specific embodiments. The foregoing specific embodiments are merely illustrative rather than restrictive. As instructed by the present application, persons of ordinary skill in the art may further devise many forms of embodiments without departing from principles of the present application and the protection scope of the claims, and all these embodiments fall within the protection scope of the present application.

## Claims

1. A data channel DC establishment method, comprising:
sending, by a first terminal, a first message without establishing a voice, video, or messaging media, wherein the first message is used to request establishment of a target DC, and the target DC comprises at least one of a bootstrap DC and an application DC; and
receiving, by the first terminal, a first response message, and establishing the target DC according to the first response message.

2. The method according to claim 1, wherein the target DC comprises a bootstrap DC, and the sending, by a first terminal, a first message comprises:
sending, by the first terminal, a first invite message to a specific target address, wherein the first message carries session description protocol SDP offer information used to establish the bootstrap DC.

3. The method according to claim 2, wherein the first invite message further carries first indication information, wherein the first indication information is used to indicate to establish only the bootstrap DC.

4. The method according to any one of claims 1 to 3, wherein the sending, by a first terminal, a first message comprises:
sending, by the first terminal, the first message in a case that a first condition is satisfied; wherein
the first condition comprises at least one of the following:
the first terminal is powered on;
the first terminal disables or turns off airplane mode;
the first terminal completes IP multimedia subsystem IMS registration or IMS re-registration;
a dialer application APP of the first terminal is started; and
a preset APP of the first terminal is started, wherein the preset APP is used to establish the target DC.

5. The method according to any one of claims 2 to 4, wherein the method further comprises:
downloading, by the first terminal, an application list based on the bootstrap DC.

6. The method according to claim 5, wherein the method further comprises:
downloading, by the first terminal, a first DC application from the application list based on the bootstrap DC.

7. The method according to any one of claims 2 to 6, wherein the method further comprises:
terminating, by the first terminal, the bootstrap DC.

8. The method according to claim 7, wherein the first terminal terminating the bootstrap DC comprises:
terminating, by the first terminal, the bootstrap DC in a case that a second condition is satisfied, wherein the second condition comprises at least one of the following:
the first terminal does not use the bootstrap DC to send message or data upon expiry of a first timer; and
the first terminal does not initiate a request message for establishing an application DC upon expiry of the first timer; wherein
the first timer is started when the first terminal successfully establishes the bootstrap DC, or started after the first terminal downloads an application list, or started after downloading a first DC application.

9. The method according to any one of claims 1 to 8, wherein the target DC comprises a bootstrap DC and an application DC, and the sending, by a first terminal, a first message comprises:
sending, by the first terminal, a second invite message to a second terminal, wherein the second invite message carries first SDP offer information, and the first SDP offer information is used to establish the bootstrap DC; and
sending, by the first terminal, a second message to the second terminal in a case that first SDP answer information is received, wherein the second message carries second SDP offer information, the first SDP answer information is SDP answer information corresponding to the first SDP offer information, and the second SDP offer information is used for establishing the application DC.

10. The method according to claim 9, wherein the sending, by the first terminal, a second message to the second terminal in a case that the first SDP answer information is received comprises:
in a case that the first terminal receives a 183 response message carrying the first SDP answer information, sending, by the second terminal, an update message; or
in a case that the first terminal receives a 200 OK message carrying the first SDP answer information, sending, by the second terminal, a re-invite message.

11. The method according to any one of claims 1 to 8, wherein the target DC comprises a bootstrap DC and an application DC, and the sending, by a first terminal, a first message comprises:
sending, by the first terminal, a third invite message to a second terminal, wherein the third invite message carries third SDP offer information, and the third SDP offer information is used to establish the bootstrap DC and the application DC.

12. The method according to claim 11, wherein the method further comprises:
initiating, by the first terminal, a procedure of downloading a DC application in a case that a second response message carrying third SDP answer information is received, wherein the third SDP answer information is SDP answer information corresponding to the third SDP offer information.

13. The method according to claim 12, wherein the second response message comprises at least one of the following:
183 message;
180 message; and
200 OK message.

14. The method according to any one of claims 1 to 8, wherein the target DC comprises an application DC, and the sending, by a first terminal, a first message comprises:
sending, by the first terminal, a fourth invite message to a second terminal, wherein the fourth invite message carries fourth SDP offer information and information for downloading a DC application, the fourth SDP offer information is used for establishing the application DC, and the first terminal has downloaded the DC application using a bootstrap DC.

15. The method according to claim 14, wherein the information for downloading a DC application comprises at least one of the following:
SDP information of the bootstrap DC;
a specific target address used by the first terminal to download the DC application;
an address of a data channel signaling function DCSF corresponding to the DC application;
an identifier allocated to the first terminal by the DCSF corresponding to the DC application; and
a stream identifier used by the first terminal to establish the bootstrap DC.

16. The method according to claim 15, wherein the method further comprises:
receiving, by the first terminal, first information from a first DCSF, wherein the first DCSF is used to establish the bootstrap DC for the first terminal, and the first information comprises at least one of the following:
an address of the first DCSF; and
an identifier allocated to the first terminal by the first DCSF.

17. The method according to any one of claims 1 to 8, wherein the target DC comprises an application DC, and the sending, by a first terminal, a first message comprises:
sending, by the first terminal, a re-invite message to a second terminal, wherein the re-invite message carries fifth SDP offer information, and the fifth SDP offer information is used for establishing the application DC.

18. A message processing method, comprising:
sending, by a second terminal, a 180 message corresponding to a third message in a case that the second terminal receives the third message and a third condition is satisfied, wherein the third message is used to request establishment of a target data channel DC, and the target DC comprises at least one of a bootstrap DC and an application DC; and
the third condition comprises at least one of the following:
the third message is used to request establishment of an application DC;
the second terminal successfully downloads of a DC application corresponding to the application DC; and
the second terminal successfully establishes of a bearer corresponding to the application DC.

19. The method according to claim 18, wherein the third message carries information for downloading a DC application, and the method further comprises:
establishing, by the second terminal, a bootstrap DC according to the information for downloading a DC application; and
downloading, by the second terminal, the DC application based on the established bootstrap DC.

20. The method according to claim 19, wherein the information for downloading a DC application comprises at least one of the following:
session description protocol SDP information of the bootstrap DC;
a specific target address used by a first terminal to download the DC application;
an address of a data channel signaling function DCSF corresponding to the DC application;
an identifier allocated to the first terminal by the DCSF corresponding to the DC application; and
a stream identifier used by the first terminal to establish the bootstrap DC.

21. The method according to claim 20, wherein the establishing, by the second terminal, a bootstrap DC according to the information for downloading a DC application comprises:
sending, by the second terminal, a provisional response message, and establishing the bootstrap DC according to the SDP information of the bootstrap DC in a case that the SDP information of the bootstrap DC is received; or
initiating, by the second terminal, a request to establish the bootstrap DC according to second information in a case that the second information is received, wherein the second information comprises at least one of the following:
a specific target address used by the first terminal to download the DC application;
an address of a data channel signaling function DCSF corresponding to the DC application;
an identifier allocated to the first terminal by the DCSF corresponding to the DC application; and
a stream identifier used by the first terminal to establish the bootstrap DC.

22. The method according to claim 19, wherein the downloading, by the second terminal, the DC application based on the established bootstrap DC comprises:
sending, by the second terminal, third information to the DCSF based on the established bootstrap DC, wherein the third information comprises at least one of an identifier of a first terminal and a stream ID sent by the first terminal; and
receiving, by the second terminal, the DC application sent by the DCSF.

23. The method according to any one of claims 18 to 22, wherein the third message comprises at least one of the following:
invite message, re-invite message, and update message.

24. The method according to any one of claims 18 to 23, wherein the method further comprises:
outputting, by the second terminal, an incoming call prompt information.

25. The method according to any one of claims 18 to 24, wherein the method further comprises:
sending, by the second terminal, SDP answer information, wherein the SDP answer information is carried in the 180 message or the 183 message.

26. A message processing method, comprising:
receiving, by an IP multimedia subsystem application server IMS AS, a first message from a first terminal; and
executing, by the IMS AS, a first operation according to the first message, wherein the first operation comprises at least one of the following:
sending second indication information to a data channel signaling function DCSF in a case that the first message is used to request establishment of a bootstrap data channel DC, wherein the second indication information is used to indicate to establish only the bootstrap DC;
sending first session description protocol SDP offer information to a second terminal in a case that the first message is used to request establishment of a bootstrap DC and an application DC, wherein the first SDP offer information is used to establish the bootstrap DC, and sending second SDP offer information to the second terminal in a case that the IMS AS receives first SDP answer information from the second terminal, wherein the first SDP answer information is SDP answer information corresponding to the first SDP offer information, and the second SDP offer information is used for establishing the application DC; and
sending a fourth message to the DCSF in a case that the first message is used to request establishment of an application DC, wherein the fourth message is used to notify the DCSF to establish only a bootstrap DC for the second terminal.

27. The method according to claim 26, wherein the sending a fourth message to a DCSF in a case that the first message is used to establish an application DC comprises:
sending a fourth message to the DCSF in a case that the first message is a re-invite message from the first terminal with a destination address being the second terminal, wherein the re-invite message carries second SDP offer information and information for downloading a DC application, and the second SDP offer information is used for establishing the application DC.

28. The method according to claim 27, wherein the fourth message carries third indication information, wherein the third indication information is used to indicate to establish only the bootstrap DC for the second terminal.

29. The method according to claim 26, wherein the sending second indication information to a data channel signaling function DCSF in a case that the first message is used to request establishment of a bootstrap DC comprises:
sending the second indication information to the data channel signaling function DCSF in a case that the first message carries first indication information or the first message carries only SDP information corresponding to the bootstrap DC, wherein the first indication information is used to indicate to establish only the bootstrap DC.

30. The method according to claim 26 or 29, wherein the second indication information is used to indicate at least one of the following:
establishing only the bootstrap DC;
establishing only the bootstrap DC for the first terminal; and
establishing a one-sided bootstrap DC.

31. The method according to claim 26, 29, or 30, wherein the method further comprises:
sending, by the IMS AS, SDP answer information corresponding to the bootstrap DC to the first terminal in a case that the first message is used to request establishment of the bootstrap DC.

32. The method according to any one of claims 26 to 31, wherein the method further comprises:
sending, by the IMS AS, third SDP answer information to the first terminal in a case that the second terminal receives second SDP answer information, wherein the third SDP answer information is SDP answer information corresponding to the bootstrap DC and the application DC.

33. The method according to any one of claims 26 to 31, wherein the second indication information comprises at least one of the following:
carrying only SDP offer information corresponding to the bootstrap DC;
not carrying SDP offer information corresponding to the application DC; and
a specific target address.

34. The method according to claim 33, wherein the specific target address comprises at least one of the following: a customer service phone number of a communication operator;
a phone number of the first terminal itself;
a phone number of the DCSF;
a phone number of the IMS AS; and
a public service identity PSI used to indicate to establish only the bootstrap DC.

35. A resource allocation method, wherein the method comprises:
receiving, by a data channel signaling function DCSF, a fourth message from an IP multimedia subsystem application server IMS AS;
allocating or reserving, by the DCSF, resources corresponding to the bootstrap DC for a first terminal in a case that the fourth message is used to notify to establish only a bootstrap data channel DC for the first terminal; or
allocating or reserving, by the DCSF, resources corresponding to the bootstrap DC for a second terminal in a case that the fourth message is used to notify to establish only a bootstrap DC for the second terminal.

36. The method according to claim 35, wherein in a case that the fourth message carries second indication information, the fourth message is used to notify to establish only the bootstrap DC for the first terminal, wherein the second indication information is used to indicate to establish only the bootstrap DC for the first terminal; or
in a case that the fourth message is triggered based on the first terminal initiating a first invite message to a specific target address, the fourth message is used to notify to establish only the bootstrap DC for the first terminal, wherein the first invite message carries session description protocol SDP offer information used to establish the bootstrap DC.

37. The method according to claim 36, wherein the second indication information is used to indicate at least one of the following:
establishing only the bootstrap DC;
establishing only the bootstrap DC for the first terminal; and
establishing a one-sided bootstrap DC.

38. The method according to claim 35, wherein in a case that the fourth message carries third indication information, the fourth message is used to notify to establish only the bootstrap DC for the second terminal, and the third indication information is used to indicate to establish only the bootstrap DC for the second terminal.

39. The method according to any one of claims 35 to 38, wherein the method further comprises:
in a case that the first terminal downloads a DC application based on the bootstrap DC, sending, by the DCSF, information for downloading a DC application to the first terminal.

40. The method according to claim 39, wherein the information for downloading a DC application comprises at least one of the following:
an address of the DCSF; and
an identifier allocated by the DCSF to the first terminal.

41. The method according to any one of claims 36 to 40, wherein the second indication information comprises at least one of the following:
carrying only SDP offer information corresponding to the bootstrap DC; and
the fourth message comprising a specific target address.

42. The method according to claim 41, wherein the specific target address comprises at least one of the following: a customer service phone number of a communication operator;
a phone number of the first terminal itself;
a phone number of the DCSF;
a phone number of the IMS AS; and
a public service identity PSI used to indicate to establish only the bootstrap DC.

43. A data channel DC establishment apparatus used for a first terminal, wherein the apparatus comprises:
a first sending module, configured to send a first message without establishing a voice, video, or messaging media, wherein the first message is used to request establishment of a target DC, and the target DC comprises at least one of a bootstrap DC and an application DC; and
a first establishment module, configured to receive a first response message, and establish the target DC according to the first response message.

44. A message processing apparatus used for a second terminal, wherein the apparatus comprises:
a first transmission module, configured to send a 180 message corresponding to the third message in a case that a third message is received and a third condition is satisfied, wherein the third message is used to request establishment of a target data channel DC, and the target DC comprises at least one of a bootstrap DC and an application DC; and
the third condition comprises at least one of the following:
the third message is used to request establishment of an application DC;
the second terminal successfully downloads a DC application corresponding to the application DC; and
the second terminal successfully establishes a bearer corresponding to the application DC.

45. A message processing apparatus used for an IP multimedia subsystem application server IMS AS, wherein the apparatus comprises:
a first receiving module, configured to receive a first message from a first terminal;
and
an execution module, configured to execute a first operation according to the first message, wherein the first operation comprises at least one of the following:
sending second indication information to a data channel signaling function DCSF in a case that the first message is used to request establishment of a bootstrap data channel DC, wherein the second indication information is used to indicate to establish only the bootstrap DC;
sending first session description protocol SDP offer information to a second terminal in a case that the first message is used to request establishment of a bootstrap DC and an application DC, wherein the first SDP offer information is used to establish the bootstrap DC, and sending second SDP offer information to the second terminal in a case that the IMS AS receives first SDP answer information from the second terminal, wherein the first SDP answer information is SDP answer information corresponding to the first SDP offer information, and the second SDP offer information is used for establishing the application DC; and
sending a fourth message to the DCSF in a case that the first message is used to request establishment of an application DC, wherein the fourth message is used to notify the DCSF to establish only a bootstrap DC for the second terminal.

46. A resource allocation apparatus used for a data channel signaling function DCSF, wherein the apparatus comprises:
a second receiving module, configured to receive a fourth message from an IP multimedia subsystem application server IMS AS;
a first resource allocation module, configured to allocate or reserve resources corresponding to the bootstrap DC for a first terminal by the DCSF in a case that the fourth message is used to notify to establish only a bootstrap data channel DC for the first terminal; or
a second resource allocation module, configured to allocate or reserve resources corresponding to the bootstrap DC for a second terminal by the DCSF in a case that the fourth message is used to notify to establish only a bootstrap DC for the second terminal.

47. A terminal, comprising a processor and a memory, wherein the memory stores a program or instructions executable on the processor, and the program or instructions, when executed by the processor, implement the steps of the data channel DC establishment method according to any one of claims 1 to 17, or implement the steps of the message processing method according to any one of claims 18 to 25.

48. A network-side device, comprising a processor and a memory, wherein the memory stores a program or instructions executable on the processor, and the program or instructions, when executed by the processor, implement the steps of the message processing method according to any one of claims 26 to 34, or implement the steps of the resource allocation method according to any one of claims 35 to 42.

49. A readable storage medium, wherein a program or instructions are stored on the readable storage medium, and the program or instructions, when executed by a processor, implement the steps of the data channel DC establishment method according to any one of claims 1 to 17, or implement the steps of the message processing method according to any one of claims 18 to 25, or implement the steps of the message processing method according to any one of claims 26 to 34, or implement the steps of the resource allocation method according to any one of claims 35 to 42.
